# EUROPEAN PATENT APPLICATION

(11) **EP 4 427 873 A1**
(43) Date of publication of application: **11.09.2024**
(21) Application number: 22889712.0
(22) Date of filing: 04.10.2022
(51) Int. Cl.: B23K 20/12

(54) **ROTATING TOOL, JOINING DEVICE, AND JOINING METHOD**

(30) Priority: 05.11.2021 JP 2021181164
(71) Applicant: Nippon Light Metal Company, Ltd., Tokyo 105-0004 (JP)
(72) Inventor: SEO, Nobushiro, Shizuoka-shi, Shizuoka 421-3291 (JP); KOIZUMI, Shingo, Shizuoka-shi, Shizuoka 421-3291 (JP)
(74) Representative: Kiwit, Benedikt
(86) International application number: PCT/JP2022/037073
(87) International publication number: WO 2023/079888

(57) **Abstract**

Provided is a rotating tool (1) used in a joining device configured to perform friction stir welding of to-be-joined members, the rotating tool (1) including: a main body (10) ; a stir pin (60) configured to perform friction stirring on the to-be-joined members by being inserted into the to-be-joined members; a shoulder (70) formed of a body separate from the stir pin (60) and configured to press the to-be-joined members in a state where the shoulder (70) is in contact with the to-be-joined members; a first elastic member (61) configured to bias the stir pin (60) toward a distal end side in an axial direction of the rotating shaft (12); and a first restriction member (100) configured to restrict movement of the stir pin (60) toward a based end side in the axial direction of the rotating shaft (12). The first restriction member (100) restricts the movement of the stir pin (60) such that an amount of deformation occurring in the first elastic member (61) with the movement of the stir pin (60) does not exceed a maximum allowable amount of the first elastic member (61).

## Description

### TECHNICAL FIELD

The present invention relates to a rotating tool, a joining device, and a joining method used in friction stir welding.

### BACKGROUND ART

As joining devices for performing friction stir welding, there are known a joining device that performs load control to control a plunging amount of a rotating tool into to-be-joined members and a joining device that performs position control to control the plunging amount. The load control has been mainly used in a joining device achieved by a robot (robot arm), and the position control has been mainly used in a joining device achieved by a machining center (MC) .

The joining device that performs the load control includes, for example, a device disclosed in Patent Literature 1. The joining device of Patent Literature 1 is a joining device that controls a press-in depth of a shoulder member or a pin member into to-be-joined objects to obtain good joining quality at preferable accuracy depending on joining conditions. This joining device controls the position of the pin member relative to the shoulder member based on a press-in reference point set in a press-in reference point setter to control the press-in depth. The joining device includes an applied pressure detector, the pressure reference point setter, a tool drive controller, and the like to perform the above-mentioned control. Moreover, a tool driver includes a rotating driver, a pin driver, a shoulder driver, a clamp driver (elastic member: coil spring), and the like.

### CITATION LIST

### Patent Literature

Patent Literature 1: JP2012-196681A

### SUMMARY OF INVENTION

### Technical Problem

Since the joining device of Patent Literature 1 performs the load control, the joining device has a complicated structure and is expensive. Accordingly, in recent years, there is a demand for a rotating tool that can perform the load control and that can be fitted to a relatively low-cost MC capable of performing only the position control.

In view of this, an object of the present invention is to provide a rotating tool that can perform the load control in a state where the rotating tool is attached to a machining center, a joining device, and a joining method.

### Solution to Problem

The present invention for solving the above problems is a rotating tool used in a joining device configured to perform friction stir welding of to-be-joined members, the rotating tool including: a main body including a fixation portion that is attached and fixed to the joining device and a rotating shaft that transmits rotating force from the joining device; a stir pin arranged in the main body to be rotatable by receiving the rotating force from the main body and be movable in an axial direction of the rotating shaft, the stir pin configured to perform friction stirring on the to-be-joined members by being inserted into the to-be-joined members; a shoulder formed of a body separate from the stir pin and arranged in the main body to receive no rotating force from the main body and be movable in the axial direction of the rotating shaft independently of the stir pin, the shoulder configured to press the to-be-joined members in a state where the shoulder is in contact with the to-be-joined members; a first elastic member configured to bias the stir pin toward a distal end side in the axial direction of the rotating shaft; and a first restriction member configured to restrict movement of the stir pin toward a based end side in the axial direction of the rotating shaft, and the first restriction member restricts the movement of the stir pin such that an amount of deformation occurring in the first elastic member with the movement of the stir pin does not exceed a maximum allowable amount of the first elastic member.

Moreover, the rotating tool preferably includes: a second elastic member configured to bias the shoulder toward the distal end side in the axial direction of the rotating shaft; and a second restriction member configured to restrict movement of the shoulder toward the base end side in the axial direction of the rotating shaft, and is preferably configured such that the second restriction member restricts the movement of the shoulder such that an amount of deformation occurring in the second elastic member with the movement of the shoulder does not exceed a maximum allowable amount of the second elastic member.

Furthermore, the rotating tool is preferably configured such that the main body further includes a first holder that has a hollow tube shape and that is attached to the rotating shaft and a first slide shaft that is housed in a center portion of the first holder to be slidable in a rotating shaft direction and that rotates in synchronization with the first holder, the stir pin is attached to a distal end of the first slide shaft, the first slide shaft is biased toward a distal end side of the stir pin via the first elastic member, and the first restriction member restricts movement of the first slide shaft toward the base end side in the axial direction of the rotating shaft.

Moreover, the rotating tool is preferably configured such that the main body further includes a second holder that has a hollow tube shape and that is provided on an outer periphery of the first holder to be rotatable relative to the first holder and a second slide shaft that is housed inside the second holder to be slidable in the axial direction of the rotating shaft, the shoulder is provided at a distal end of the second slide shaft, the second slide shaft is biased toward a distal end side of the shoulder via the second elastic member, and the second restriction member restricts movement of the second slide shaft toward the base end side in the axial direction of the rotating shaft.

Furthermore, the rotating tool is preferably configured such that the first restriction member is provided in the first holder, and the movement of the first slide shaft is restricted by contact of a base end portion of the first slide shaft and a bottom portion of the first holder on the base end side with the first restriction member that occurs with the movement of the first slide shaft.

Moreover, the rotating tool is preferably configured such that the second restriction member is provided in the second holder, and the movement of the second slide shaft is restricted by contact of a base end portion of the second slide shaft and a bottom portion of the second holder on the base end side with the second restriction member that occurs with the movement of the second slide shaft.

Furthermore, the rotating tool is preferably configured such that the first restriction member is provided in a bottom portion of the first holder on the base end side, and the movement of the first slide shaft is restricted by contact of a base end portion of the first slide shaft with the first restriction member that occurs with the movement of the first slide shaft.

Moreover, the rotating tool is preferably configured such that the second restriction member is provided in a bottom portion of the second holder on the base end side, and the movement of the second slide shaft is restricted by contact of a base end portion of the second slide shaft with the second restriction member that occurs with the movement of the second slide shaft.

Furthermore, the rotating tool is preferably configured such that the first restriction member is provided in a base end portion of the first slide shaft, and the movement of the first slide shaft is restricted by contact of a bottom portion of the first holder on the base end side with the first restriction member that occurs with the movement of the first slide shaft.

Moreover, the rotating tool is preferably configured such that the second restriction member is provided in a base end portion of the second slide shaft, and the movement of the second slide shaft is restricted by contact of a bottom portion of the second holder on the base end side with the second restriction member that occurs with the movement of the second slide shaft.

Furthermore, the rotating tool is preferably configured such that the first restriction member is provided on an outer peripheral surface of the first slide shaft, and the movement of the first slide shaft is restricted by contact of the first restriction member with an intermediate portion of the first holder that occurs with the movement of the first slide shaft.

Moreover, the rotating tool is preferably configured such that the second restriction member is provided on an outer peripheral surface of the second slide shaft, and the movement of the second slide shaft is restricted by contact of the second restriction member with an intermediate portion of the second holder that occurs with the movement of the second slide shaft.

Furthermore, the rotating tool is preferably configured such that the first restriction member is provided on an outer peripheral surface of the first slide shaft, and the movement of the first slide shaft is restricted by contact of the first restriction member with a distal end portion of the first holder that occurs with the movement of the first slide shaft.

Moreover, the rotating tool is preferably configured such that the second restriction member is provided on an outer peripheral surface of the second slide shaft, and the movement of the second slide shaft is restricted by contact of the second restriction member with a distal end portion of the second holder that occurs with the movement of the second slide shaft.

Furthermore, the rotating tool is preferably configured such that the first restriction member is provided in a distal end portion of the first slide shaft, and the movement of the first slide shaft is restricted by contact of the first restriction member with a distal end portion of the first holder that occurs with the movement of the first slide shaft.

Moreover, the rotating tool is preferably configured such that the second restriction member is provided in a distal end portion of the second slide shaft, and the movement of the second slide shaft is restricted by contact of the second restriction member with a distal end portion of the second holder that occurs with the movement of the second slide shaft.

Furthermore, the rotating tool is preferably configured such that the stir pin is the first restriction member, and the movement of the first slide shaft is restricted by contact of the stir pin with a distal end portion of the first holder that occurs with the movement of the first slide shaft.

Moreover, the rotating tool is preferably configured such that the shoulder is the second restriction member, and the movement of the second slide shaft is restricted by contact of the shoulder with a distal end portion of the second holder that occurs with the movement of the second slide shaft.

Moreover, the present invention is a joining device including: the rotating tool according to any one of claims 1 to 18; a power unit configured to output the rotating force to be transmitted to the rotating shaft of the rotating tool; and a position controller configured to hold the fixation portion of the rotating tool and perform position control of the rotating tool, and the joining device performs the friction stir welding on the to-be-joined members by causing the position controller to move the rotating tool such that the rotating tool is located at a predetermined height position relative to the to-be-joined members, and insert the stir pin into the to-be-joined members.

Furthermore, the present invention includes performing the friction stir welding on the to-be-joined members by moving the rotating tool according to any one of claims 1 to 18 such that the rotating tool is located at a predetermined height position relative to the to-be-joined members, and inserting the stir pin into the to-be-joined members.

### Advantageous Effects of Invention

According to the rotating tool, the joining device, and the joining method in the present invention, load control using the elastic members can be performed. Moreover, according to the rotating tool, the joining device, and the joining method in the present invention, it is possible to insert the stir pin also into a relatively-hard to-be-joined members while using the elastic members.

### BRIEF DESCRIPTION OF DRAWINGS

FIG. 1 is a cross-sectional view showing a rotating tool according to a first embodiment of the present invention.
FIG. 2 is a partial cutaway perspective view showing the rotating tool according to the first embodiment.
FIG. 3 is a partial cutaway exploded perspective view showing the rotating tool according to the first embodiment.
FIG. 4 is a cross-sectional view showing a most-contracted state of the rotating tool according to the first embodiment.
FIGs. 5A to 5C are cross-sectional views showing an operation of each part at start of friction stir welding of the rotating tool according to the first embodiment.
FIG. 6 is a cross-sectional view showing an operation of each part in the friction stir welding of the rotating tool according to the first embodiment.
FIG. 7 is a graph showing time and generated reaction force in the friction stir welding of the rotating tool according to the first embodiment.
FIG. 8 is a partial cutaway perspective view showing a rotating tool according to a modified example of the first embodiment of the present invention.
FIG. 9 is a cross-sectional view showing a rotating tool according to a second embodiment of the present invention.
FIG. 10 is a cross-sectional view showing a rotating tool according to a third embodiment of the present invention.
FIG. 11 is a cross-sectional view showing a rotating tool according to a fourth embodiment of the present invention.
FIG. 12 is a schematic view showing a most-contracted state of the rotating tool according to the fourth embodiment.
FIG. 13 is a cross-sectional view showing a rotating tool according to a fifth embodiment of the present invention.
FIG. 14 is a schematic view showing a most-contracted state of the rotating tool according to the fifth embodiment.
FIG. 15 is a cross-sectional view showing a rotating tool according to a sixth embodiment of the present invention.
FIG. 16 is a schematic view showing a most-contracted state of the rotating tool according to the sixth embodiment.
FIG. 17 is a cross-sectional view showing a rotating tool according to a seventh embodiment of the present invention.
FIG. 18 is a schematic view showing a most-contracted state of the rotating tool according to the seventh embodiment.

### DESCRIPTION OF EMBODIMENTS

Embodiments of the present invention are explained with reference to the drawings as appropriate. The present invention is not limited only to the following embodiments. Moreover, some or all of components in the embodiments can be combined as appropriate. Furthermore, the drawings are drawings for conceptually explaining the present invention, and dimensions of shown components and ratios of the dimensions may vary from actual dimensions and ratios.

### [1. First Embodiment]

### [1-1. Rotating Tool]

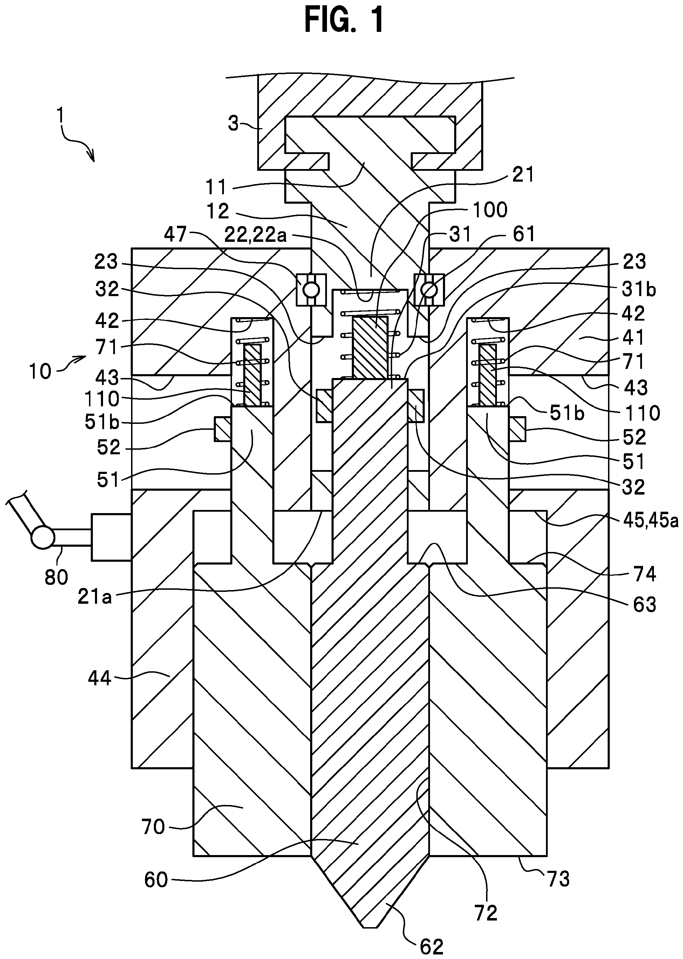

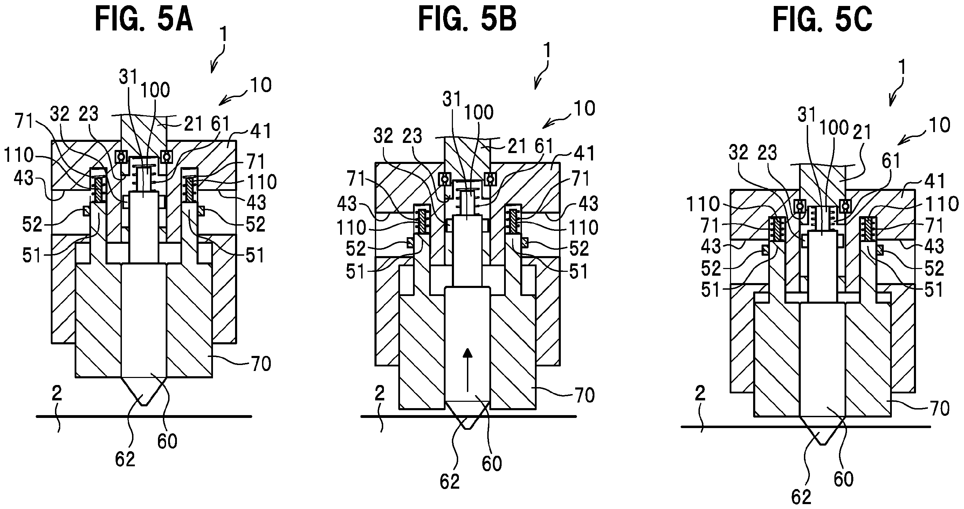

First, a configuration of a rotating tool according to the present embodiment is explained. As shown in FIG. 1, the rotating tool 1 according to the present embodiment is a tool used in a joining device that performs friction stir welding of to-be-joined members 2 (see FIG. 5), and is inserted into a butt portion of the to-be-joined members 2 while being rotated. The rotating tool 1 as described above includes a main body 10, a stir pin 60, a shoulder 70, a first elastic member 61, and a first restriction member 100. The rotating tool 1 further includes second elastic members 71 and second restriction members 110. Furthermore, the rotating tool 1 includes a holding unit 80.

### <Main Body>

The main body 10 is a portion fixed to a joining device 3 such as, for example, a machining center, and includes a fixation portion 11 and a rotating shaft 12. The fixation portion 11 is portion configured to be attached and fixed to the joining device 3, and has a cylindrical shape. The fixation portion 11 is a chuck mechanism, and can be detachably fixed to the joining device by working in cooperation with a chuck mechanism that is provided in the joining device 3 and that forms a pair with the fixation portion 11. Examples of the chuck mechanisms include a groove provided in the fixation portion 11 and a claw provided in the joining device 3 and configured to clamp the fixation portion 11 by being fitted to the groove on the fixation portion 11 side. The rotating shaft 12 is provided by being coupled to an end side (lower side in FIG. 1) of the fixation portion 11 other than the side where the fixation portion 11 is attached to the joining device 3. The rotating shaft 12 has a cylindrical column shape. The rotating shaft 12 is a portion that transmits rotating force from the joining device 3 to the stir pin 60, and is coupled to a rotating shaft (not shown) of the joining device 3 via the fixation portion 11.

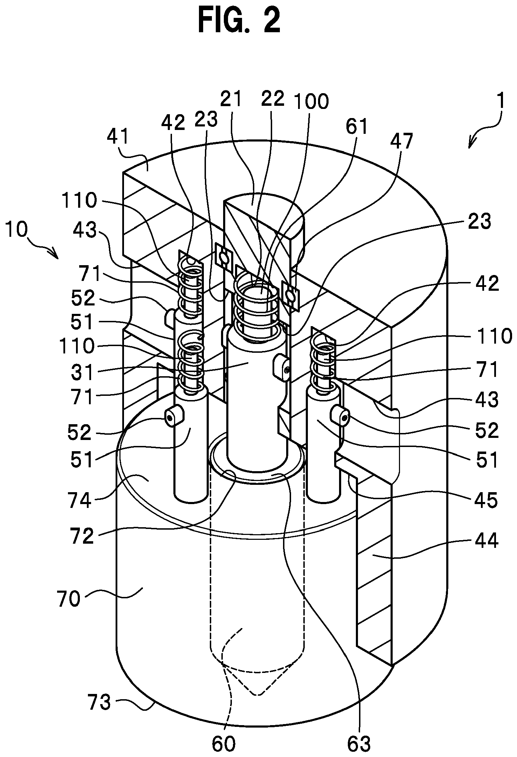

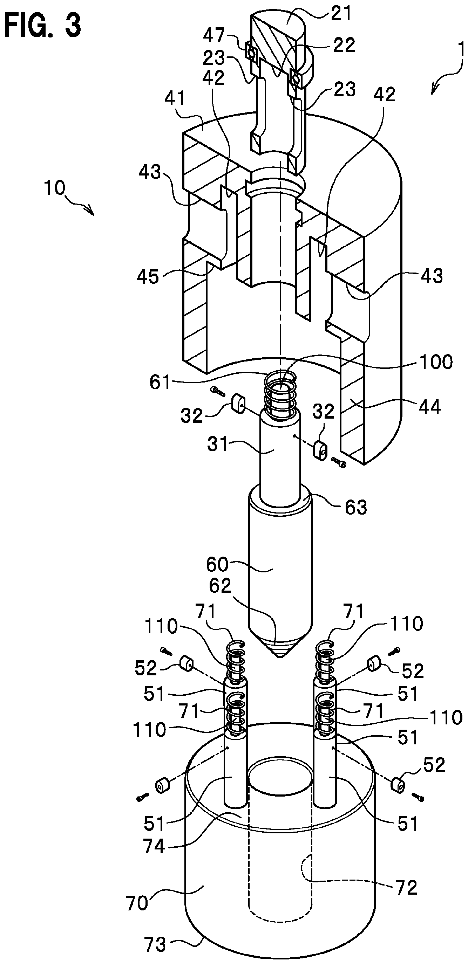

As also shown in FIGs. 2 and 3, the main body 10 further includes a first holder 21, a first slide shaft 31, a second holder 41, and second slide shafts 51.

### <First Holder>

The first holder 21 is a portion that is attached to the rotating shaft 12, rotates in synchronization with the rotating shaft 12, and supports the stir pin 60. The first holder 21 has a bottomed cylinder shape (hollow tube shape), and a first housing recess portion 22 in which the first slide shaft 31 is inserted is formed inside the first holder 21. The first housing recess portion 22 has a cylindrical column shape, and is opened toward the stir pin 60 side (lower side in FIG. 1). Key grooves 23 are formed in a cylinder body portion of the first holder 21 (outer peripheral edge portion of the first housing recess portion 22). The key grooves 23 are formed in an obround shape elongating in an axial direction (up-down direction in FIG. 1) of the rotating shaft 12, and penetrate the first holder 21 from an outer peripheral surface to an inner peripheral surface of the first holder 21. The key grooves 23 do not have to penetrate the cylinder body portion, and may be formed in a groove shape on the inner peripheral surface of the cylinder body portion. The key grooves 23 are arranged at intervals of 180° in a circumferential direction of the cylinder body portion, and are formed at two locations to face each other. Note that the number of key grooves 23 is not limited to two, and may be one or three or more.

### <First Slide Shaft>

The first slide shaft 31 is a portion that is housed in the first housing recess portion 22 in a center portion of the first holder 21 to be slidable in a rotating shaft direction (up-down direction in FIG. 1) and that rotates in synchronization (corotates) with the first holder 21. The first slide shaft 31 has a cylindrical column shape, and has such an outer diameter that the first slide shaft 31 can be housed in the first housing recess portion 22. An outer peripheral surface of the first slide shaft 31 is provided with keys 32 protruding outward. The keys 32 are fixed at positions corresponding to the key grooves 23, in a base end portion of the first slide shaft 31 (deep end portion of the first housing recess portion 22: upper end portion in FIG. 1), and are inserted into the key grooves 23. The keys 32 have an obround shape elongating in the rotating shaft direction, have a width dimension equivalent to the key grooves 23, and have a shorter length dimension than the dimension of the key grooves 23 in a longitudinal direction. In other words, the keys 32 are fitted in the width direction of the key grooves 23, and can move in the longitudinal direction. Note that the shape of the keys 32 is not limited to the obround shape, and may be other shapes such as circle, ellipse, long ellipse, or rectangle shape as long as the keys 32 have a width dimension equivalent to the key grooves 23. The stir pin 60 is integrally provided in a distal end portion of the first slide shaft 31 (end portion on the side away from the joining device 3: lower end portion in FIG. 1). Accordingly, the stir pin 60 is biased toward the distal end side of the first slide shaft 31 by being biased toward the distal end side by the first elastic member 61.

### <Second Holder>

The second holder 41 is a cylindrical (hollow tube shaped) portion provided on an outer periphery of the first holder 21 to be rotatable relative to the first holder 21, and is a portion that supports the shoulder 70. A bearing 47 is interposed between the second holder 41 and the rotating shaft 12. The bearing 47 is arranged to surround the rotating shaft 12. The second holder 41 is thereby provided to be rotatable relative to the rotating shaft 12. Since the first holder 21 and the second holder 41 can rotate relative to each other, the first holder 21 can rotate inside the second holder 41. A cylinder body portion of the second holder 41 is formed to be thicker than the cylinder body portion of the first holder 21. Multiple second housing recess portions 42 in which the second slide shafts 51 are inserted are formed in the cylinder body portion of the second holder 41. In the present embodiment, the second housing recess portions 42 are formed at four locations at a pitch of 90° in the circumferential direction of the cylinder body portion. The second housing recess portions 42 have a cylindrical column shape, and are opened toward the shoulder 70 side (lower side in FIG. 1). Key grooves 43 are formed in outer peripheral edge portions of the second housing recess portions 42. The key grooves 43 are formed in an obround shape elongating in the axial direction (up-down direction in FIG. 1) of the rotating shaft 12, and penetrates the second holder 41 from inner peripheral surfaces of the second housing recess portions 42 to an outer peripheral surface of the second holder 41. Note that the key grooves 43 do not have to penetrate the second holder 41, and may be formed in a groove shape on the inner peripheral surfaces of the second housing recess portions 42. Each of the key grooves 43 is formed at one location in a corresponding one of the second housing recess portions 42, on the outer peripheral surface side of the cylinder body portion of the second holder 41. Moreover, the number of second housing recess portions 42 is not limited to four, and may be one, two, or five or more.

A skirt portion 44 covering an outer peripheral portion of the shoulder 70 is formed in a lower portion of the second holder 41. A shoulder housing recess portion 45 in which upper portions of the stir pin 60 and the shoulder 70 are housed is formed inside the skirt portion 44. A bottom portion 45a (upper end surface in FIG. 1. A distal end portion of the second holder 41) on the base end side of the shoulder housing recess portion 45 is flush with a distal end portion 21a of the first holder 21. Note that the bottom portion 45a (upper end surface in FIG. 1) of the shoulder housing recess portion 45 and the distal end portion 21a of the first holder 21 do not have to be flush.

### <Second Slide Shafts>

The second slide shafts 51 are portions that are housed in the second housing recess portions 42 of the second holder 41 to be slidable in the rotating shaft direction. The second slide shafts 51 have a cylindrical column shape, and have such an outer diameter that the second slide shafts 51 can be housed in the second housing recess portions 42. Outer peripheral surfaces of the second slide shafts 51 are provided with keys 52 protruding outward. The keys 52 are fixed at positions corresponding to the key grooves 43, in end portions of the second slide shafts 51 (end portions on the base end side of the second housing recess portions 42: upper end portion in FIG. 1), and are inserted into the key grooves 43. The keys 52 have an obround shape elongating in the rotating shaft direction, have a width dimension equivalent to the key grooves 43, and have a shorter length dimension than the dimension of the key grooves 43 in the longitudinal direction. In other words, the keys 52 are fitted in the width direction of the key grooves 43, and can move in the longitudinal direction. The keys 52 can be inserted from the outside of the key grooves 43 with the second slide shafts 51 inserted in the second housing recess portions 42, and fixed to outer peripheral surfaces of the second slide shafts 51. The shape of the keys 52 is not limited to the obround shape, and may be other shapes such as circle, ellipse, long ellipse, or rectangle shape as long as the keys 52 have a width dimension equivalent to the key grooves 43. The shoulder 70 is integrally provided in distal end portions of the second slide shafts 51 (end portions on the side away from the joining device 3: lower end portions in FIG. 1).

### <Stir Pin>

The stir pin 60 is a portion that is inserted into the to-be-joined members while being rotated by receiving rotating force from the main body 10 to perform friction stirring on the to-be-joined members. The stir pin 60 is made of, for example, tool steel, and is formed in a cylindrical column shape. A distal end portion 62 (lower end portion in FIG. 1) of the stir pin 60 is tapered toward a distal end. The distal end of the distal end portion 62 of the stir pin has a flat surface shape orthogonal to the axial direction. The stir pin 60 is formed integrally with the first slide shaft 31, and is moved in the axial direction of the rotating shaft by slide movement of the first slide shaft 31. The stir pin 60 has a larger diameter than the first slide shaft 31, and a base end portion 63 is formed in a coupling portion between the stir pin 60 and the first slide shaft 31 (base end portion of the stir pin 60).

### <First Elastic Member>

The first elastic member 61 is a portion that biases the stir pin 60 toward the distal end side in the axial direction of the rotating shaft 12. The first elastic member 61 is formed of, for example, a coil spring, and is fitted between a base end portion 31b of the first slide shaft 31 and a bottom portion 22a of the first housing recess portion 22, in the first housing recess portion 22. The first elastic member 61 can bias the stir pin toward the distal end side against force received from the stir pin 60 side.

The elasticity of the first elastic member 61 is set such that, when the stir pin 60 is inserted into the to-be-joined members 2 made of at least one material selected from the group consisting of aluminum, copper, magnesium, and alloys of these metals at predetermined plunging load, the stir pin 60 is inserted into the to-be-joined members 2 while changing its position within a predetermined range in an entire movable range of the stir pin 60 achieved by the first elastic member 61 (movable length of the keys 32 in the key grooves 23).

For example, the elasticity is set such that, when the first elastic member 61 is a coil spring and the stir pin 60 is inserted with the load applied to the first elastic member 61 being 100 kg to 5 t, the stir pin 60 is inserted into the to-be-joined members 2 with deformation being such that a deflection amount of the first elastic member 61 is within a range of 0 to 30% of the free length of the first elastic member 61. Accordingly, even if the height of the to-be-joined members 2 changes when the stir pin 60 is plunged at a constant height relative to the to-be-joined members 2, the first elastic member 61 deforms in accordance with the change in the to-be-joined members 2, and this facilitates maintaining of an insertion amount of the stir pin 60 at a constant amount.

Note that the first elastic member 61 is not limited to a coil spring, and may be a metal spring such as a leaf spring or a disc spring or a polymer elastic body (elastomer) of rubber, a polymer resin, a sponge-like resin, or the like. Moreover, the first elastic member 61 may be a fluid spring using air pressure, gas pressure, or hydraulic pressure or a magnetic spring using magnetic force or electromagnetic force.

The first elastic member 61 only needs to be set to satisfy a relationship between a deformation amount and elasticity in which the stir pin 60 is inserted to a predetermined depth, in consideration of joining conditions. The joining conditions that affect the setting of the first elastic member 61 include, for example, conditions of the to-be-joined members such as the material of the to-be-joined members and the shape of a joining portion and joining modes such as an insertion depth of the stir pin 60 and the shape, rotating speed, and moving speed of the rotating tool.

### <First Restriction Member>

The first restriction member (first loosely-fitted restriction member) 100 is a member that restricts movement of the stir pin 60 toward the base end side of the rotating shaft 12 beyond a predetermined range as shown in FIG. 1 and the like. In the present embodiment, the first restriction member 100 is arranged in a hollow portion of the first elastic member 61 in a loosely-fitted state, inside the first holder 21. The first restriction member 100 is made of a material that is a metal, a resin, rubber, or the like and that is relatively hard to withstand reaction force in friction stir welding. Although the first restriction member 100 has a cylindrical column shape in the present embodiment, the first restriction member 100 may be formed as appropriate according to the shape of an arrangement location. The first restriction member 100 restricts the movement of the stir pin 60 such that an amount of deformation occurring in the first elastic member 61 with the movement of the stir pin 60 does not exceed the maximum deflection amount (maximum allowable amount) of the first elastic member 61.

For example, the maximum deflection amount of the first elastic member 61 according to the present embodiment is set to a deflection amount in the case where the first elastic member 61 is deformed by 30% of the free length of the first elastic member 61. The maximum deflection amount means an amount at which the first elastic member 61 is most compressed when elastic force of the first elastic member 61 is exerted. When the deflection amount exceeds the maximum deflection amount, the elastic force of the first elastic member 61 is not exerted according to the performance, or the first elastic member 61 breaks earlier than expected.

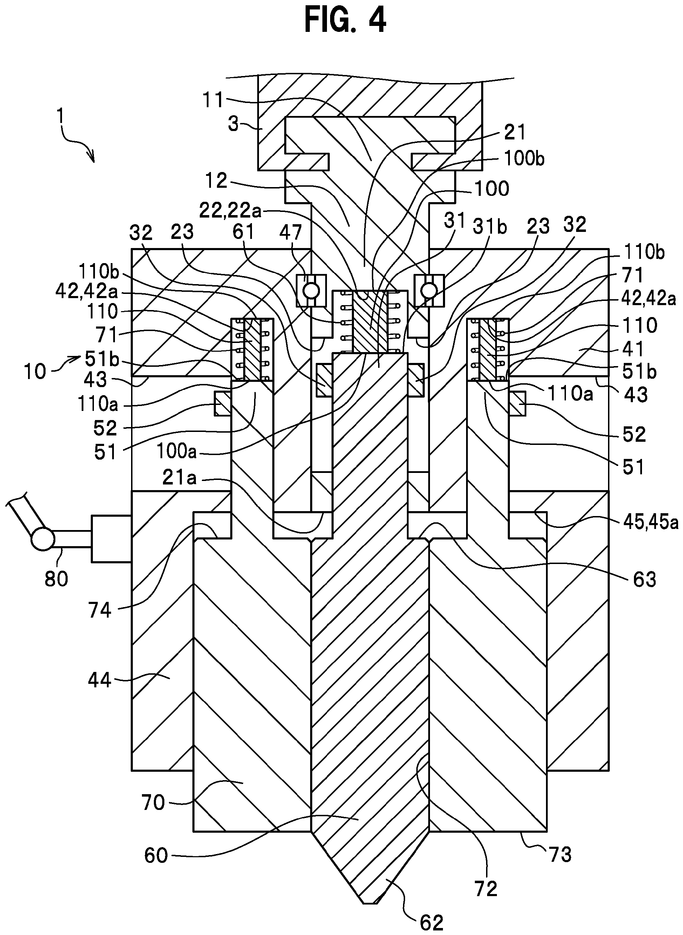

As shown in FIG. 4, in the present embodiment, when the deflection amount of the first elastic member 61 reaches 30% of the free length of the first elastic member 61, in the first restriction member 100, a distal end portion (distal end surface) 100a of the first restriction member 100 comes into the contact with the base end portion 31b of the first slide shaft 31, and a base end portion (base end surface) 100b comes into contact with the bottom portion 22a of the first housing recess portion 22. This can prevent the first elastic member 61 from exceeding the maximum deflection amount and deforming. The maximum deflection amount of the first elastic member 61 can be set as appropriate depending on the first elastic member 61 and the first restriction member 100. The maximum deflection amount of the first elastic member 61 may be, for example, 25%, 20%, 15%, 10%, or 5%.

Note that, since the first elastic member 61 is used in the present embodiment, "maximum deflection amount" is used. Meanwhile, for example, when a different member (fluid spring using air pressure, gas pressure, or hydraulic pressure or magnetic spring using magnetic force or electromagnetic force) is used as the first elastic member as described above, an amount at which the elastic force is not exerted or the elastic member breaks if this amount is exceeded is defined as "maximum allowable amount".

Moreover, in the present embodiment, the first restriction member 100 is a solid body of a metal or the like, and restricts the movement of the stir pin 60 by being brought into contact with the stir pin 60. However, the movement of the stir pin 60 may be restricted in a contactless manner by using, for example, a fluid spring using air pressure, gas pressure, or hydraulic pressure or a magnetic spring using magnetic force or electromagnetic force.

Furthermore, the shape and arrangement of the first restriction member 100 are not limited as long as the first restriction member 100 restricts the movement of the stir pin 60. For example, the first restriction member 100 may be such that part of the main body 10 or the stir pin 60 functions as the first restriction member 100 or the first restriction member 100 is provided by being formed integrally with the main body 10 or the stir pin 60. Alternatively, the first restriction member 100 may be provided in a form in which a separate member is attached to the main body 10 or the stir pin 60.

### <Shoulder>

The shoulder 70 is a portion that presses the to-be-joined members in a state where the shoulder 70 is in contact with the to-be-joined members. The shoulder 70 is formed as a body separate from the stir pin 60, and is connected to the main body 10 to be movable in the axial direction of the rotating shaft independently of the stir pin 60. The shoulder 70 is made of, for example, tool steel. The shoulder 70 has a cylindrical shape, and is arranged coaxial to the stir pin 60 to surround the stir pin 60. Specifically, the stir pin 60 is inserted in a hollow portion 72 of the shoulder 70. The stir pin 60 can rotate relative to the shoulder 70 and move relative to the shoulder 70 in the axial direction. A distal end portion 73 of the shoulder 70 is at the same height as a base end portion of a tapered surface of the distal end portion 62 in the stir pin 60. Specifically, the distal end portion 62 of the stir pin 60 protrudes toward the distal end side, from the distal end portion 73 of the shoulder 70. In other words, the stir pin 60 protrudes downward beyond the distal end portion 73 of the shoulder 70. The shoulder 70 is formed integrally with the second slide shafts 51, and is moved in the axial direction of the rotating shaft by slide movement of the second slide shafts 51. The second slide shafts 51 are coupled to a base end portion 74 of the shoulder 70, and protrude toward the second housing recess portions 42. The second slide shafts 51 are coupled to the base end portion 74 of the shoulder 70 at four locations at a pitch of 90° (see FIG. 3). Note that the number of second slide shafts 51 is not limited to four, and may be one, two, three, or five or more as long as the number corresponds to the number of second housing recess portions 42.

Since the second slide shafts 51 formed integrally with the shoulder 70 are inserted into the second housing recess portions 42 of the second holder 41 as described above, the shoulder 70 rotates in synchronization with the second holder 41.

### <Second Elastic Members>

The second elastic members 71 are portions that bias the shoulder 70 toward the distal end side in the axial direction of the rotating shaft 12. The second elastic members 71 are formed of, for example, coil springs like the first elastic member 61. The second elastic members 71 are fitted between base end portions 51b of the second slide shafts 51 and bottom portions 42a of the second housing recess portions 42. The second elastic members 71 can bias the shoulder 70 toward the distal end side against force received from the shoulder 70.

The elasticity of the second elastic members 71 is set such that, when the stir pin 60 is inserted into the to-be-joined members 2 made of at least one material selected from the group consisting of aluminum, copper, magnesium, and alloys of these metals at predetermined plunging load, the shoulder 70 presses the to-be-joined members 2 while changings its position within a predetermined range in an entire movable range of the shoulder 70 achieved by the second elastic members 71.

For example, the elasticity is set such that, when the second elastic members 71 are coil springs and the stir pin 60 is inserted with the load applied to the second elastic members 71 being 50 kg to 2 t, the shoulder 70 presses the to-be-joined members 2 with deformation being such that a deflection amount of the elastic members 71 is within a range of 0 to 30% of the free length of the second elastic members 71. This facilitates the pressing of the to-be-joined members with the shoulder 70 while avoiding insertion of the shoulder 70 into the to-be-joined members 2 in the state where the shoulder 70 is in contact with the to-be-joined members 2. The second elastic members 71 are more deformable than the first elastic member 61.

Note that, like the first elastic member 61, the second elastic members 71 are not limited to coil springs, and may be metal springs such as leaf springs or disc springs or polymer elastic bodies (elastomer) of rubber, a polymer resin, a sponge-like resin, or the like. Moreover, the second elastic members 71 may be fluid springs using air pressure, gas pressure, or hydraulic pressure or magnetic springs using magnetic force or electromagnetic force.

The second elastic members 71 only need to be set to satisfy a relationship between a deformation amount and elasticity in which the shoulder 70 can press the to-be-joined members 2 without being inserted into the to-be-joined members 2 in the state where the shoulder 70 pressed against the to-be-joined members 2 is in contact with the to-be-joined members 2, in consideration of the joining conditions. The joining conditions that affect the setting of the second elastic members 71 include, for example, a condition of the to-be-joined members such as the material of the to-be-joined members 2 and the shape of a joining portion and joining modes such as the insertion depth of the stir pin 60 and the shape, rotating speed, and moving speed of the rotating tool 1. The shoulder 70 only needs to be in contact with the to-be-joined members 2 at least partially, and a gap may be formed between the shoulder 70 and the to-be-joined members 2 to some extent depending on a relationship with a surface shape of the to-be-joined members 2. However, the shoulder 70 preferably comes into contact with the to-be-joined members 2 without a gap to press a metal material overflowing due to the friction stir welding and prevent formation of a weld flash. Moreover, the shoulder 70 may be inserted into the to-be-joined members 2 to some extent. However, the shoulder 70 is preferably inserted at such a level that no recess portion is formed after the joining due to the contact between the to-be-joined members 2 and the shoulder 70, and is preferably not deeply inserted.

### <Second Restriction Members>

The second restriction members (second loosely-fitted restriction members) 110 are members that restrict movement of the shoulder 70 toward the base end side of the rotating shaft 12 beyond a predetermined range as shown in FIG. 1 and the like. In the present embodiment, the second restriction members 110 are arranged in hollow portions of the second elastic members 71 in a loosely-fitted state. Total of four second restriction members 110 are arranged for the respective second elastic members 71. The second restriction members 110 are made of a material that is a metal, a resin, rubber or the like and that is relatively hard to withstand reaction force in the friction stir welding. Although the second restriction members 110 have a cylindrical column shape in the present embodiment, the second restriction members 110 may be formed as appropriate according to the shape of arrangement locations. The second restriction members 110 restrict the movement of the shoulder 70 such that an amount of deformation occurring in the second elastic members 71 with the movement of the shoulder 70 does not exceed the maximum deflection amount (maximum allowable amount) of the second elastic members 71.

As shown in FIG. 4, in the present embodiment, when the deflection amount of the second elastic members 71 reaches 30% of the free length of the second elastic members 71, in the second restriction members 110, distal end portions (distal end surfaces) 110a of the second restriction members 110 come into the contact with the base end portions 51b of the second slide shafts 51, and base end portions (base end surfaces) 110b come into contact with the bottom portions 42a of the second housing recess portions 42. This can prevent the second elastic members 71 from exceeding the maximum deflection amount and deforming. The maximum deflection amount of the second elastic members 71 can be set as appropriate depending on the second elastic members 71 and the second elastic members 71. The maximum deflection amount of the second elastic members 71 may be, for example, 25%, 20%, 15%, 10%, or 5%.

Note that, since the second elastic members 71 are used in the present embodiment, "maximum deflection amount" is used. Moreover, in the present embodiment, the second restriction members 110 are solid bodies of a metal or the like, and restrict the movement of the shoulder 70 by coming into contact with the shoulder 70. However, the movement of the shoulder 70 may be restricted in a contactless manner with a fluid spring using air pressure, gas pressure, or hydraulic pressure or a magnetic spring using magnetic force or electromagnetic force.

Furthermore, the shape and arrangement of the second restriction members 110 are not limited as long as the second restriction members 110 restrict the movement of the shoulder 70. For example, the second restriction members 110 may be such that part of the main body 10 or the shoulder 70 functions as the second restriction members 110 or the second restriction members 110 are provided by being formed integrally with the main body 10 or the shoulder 70. Alternatively, the second restriction members 110 may be provided in a form in which a separate member is attached to the main body 10 or the shoulder 70.

### <Holding unit>

As shown in FIG. 1, the holding unit 80 is a rod-shaped arm member, and a distal end portion of the holding unit 80 is fixed to an outer peripheral surface of the second holder 41. A base end portion of the holding unit 80 is connected to a fixed system of the joining device 3, and holds the second holder 41 in a not-rotating state. The holding unit 80 is included in the rotating tool 1. The second holder 41 and the shoulder 70 are provided to be rotatable relative to the rotating shaft 12, the first holder 21, and the stir pin 60, and are held in the not-rotating state by the holding unit 80. The shoulder 70 can be thereby held in the not-rotating state also when the stir pin 60 rotates.

### [1-2. Joining Device]

Next, a configuration of the joining device 3 including the rotating tool 1 with the above-mentioned configuration is explained. The joining device 3 includes a power unit (not shown) that outputs the rotating force to be transmitted to the rotating shaft 12 of the rotating tool 1 and a position controller (not shown) that holds the fixation portion 11 of the rotating tool 1 and performs position control of the rotating tool. The joining device 3 is formed of, for example, a machining center that performs position control. A position control device is formed of a CPU and the like, and activates the power unit and causes the power unit to move the rotating tool 1 based on position information inputted in advance. The power unit moves the rotating tool 1 in directions of three axes of X, Y, and Z.

### [1-3. Joining Method]

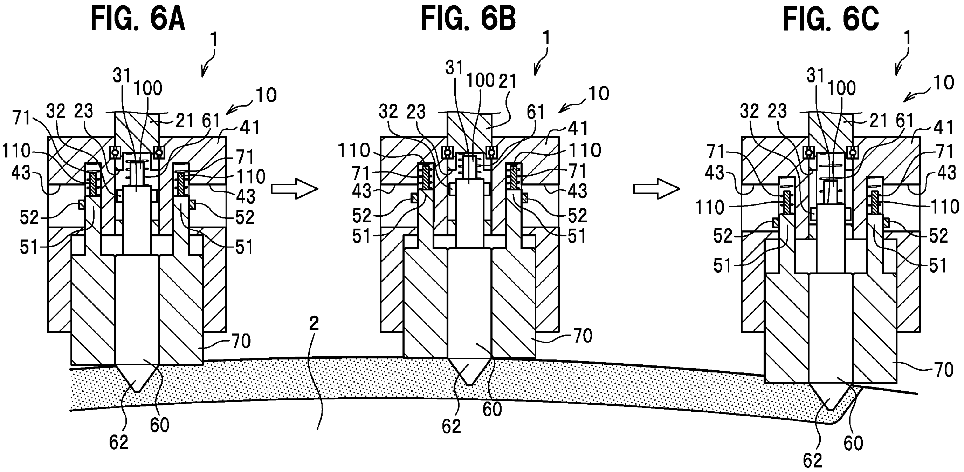

Next, a joining method according to the present invention is explained with reference to FIGs. 5A to 5C and FIG. 6. In this joining method, the friction stir welding on the to-be-joined members 2 is performed by moving the rotating tool 1 of the present embodiment such that the rotating tool 1 is located at a predetermined height position set in advance relative to the to-be-joined members 2, and inserting the rotating stir pin 60 of the rotating tool 1 into the to-be-joined members 2 with the shoulder 70 of the rotating tool 1 pressed against the to-be-joined members 2.

In the insertion of the stir pin 60, as shown in FIGs. 5A and 5B, first, the distal end of the stir pin 60 comes into contact with the to-be-joined members 2 as the rotating tool 1 is brought closer to the to-be-joined members 2 in an insertion direction. When the rotating tool 1 is brought even closer to the to-be-joined members 2, the stir pin 60 is inserted into the to-be-joined members 2 while the elastic force by the first elastic member 61 biasing the stir pin 60 toward the to-be-joined members 2 increases due to compression of the first elastic member 61. The joining is performed by bringing the rotating tool 1 closer to the to-be-joined members 2 in the insertion direction as described above until the stir pin 60 is inserted into the to-be-joined members 2 to a desired depth. In this case, the first elastic member 61 and the joining conditions are set such that the stir pin 60 can be inserted into the to-be-joined members 2 in a state where a room for deformation of the first elastic member 61 is left to prevent the deflection amount of the first elastic member 61 from exceeding the maximum deflection amount. Alternatively, the stir pin 60 is inserted into the to-be-joined members 2 by being pressed against the to-be-joined members 2 in a state where the movement of the stir pin 60 is restricted by the first restriction member 100 to prevent the deflection amount of the first elastic member 61 from exceeding the maximum deflection amount.

When the rotating tool 1 is further brought closer to the to-be-joined members 2 as shown in FIG. 5C, the shoulder 70 comes into contact with the to-be-joined members 2. The shoulder 70 is pressed against the to-be-joined members 2 while the elastic force by the second elastic members 71 biasing the shoulder 70 toward the to-be-joined members 2 increases due to compression of the second elastic members 71. In this case, the elastic force of the second elastic members 71 is set such that the shoulder 70 can be pressed against the to-be-joined members 2 in a state where the second elastic members 71 are not completely deformed and a room for deformation of the second elastic members 71 is left. Alternatively, the second elastic members 71 are set such that the shoulder 70 can press the to-be-joined members 2 without being inserted into the to-be-joined members 2 in a state where the shoulder 70 is in contact with the to-be-joined members 2.

In the joining by the rotating tool 1, as shown in a left portion of FIG. 6, the stir pin 60 is biased toward the distal end side by the first elastic member 61, and the shoulder 70 is biased toward the distal end side by the second elastic members 71. As shown in the left portion of FIG. 6, the distal end portion 62 of the stir pin 60 is thereby inserted into the to-be-joined members 2 to the desired depth when there is no error in the height of the to-be-joined members 2 with respect to a set value. Moreover, the shoulder 70 can press the to-be-joined members 2 without being inserted into the to-be-joined members 2 in the state where the shoulder 70 is in contact with the to-be-joined members.

Next, explanation is given of the case where the height of the to-be-joined members 2 becomes slightly higher than the set value due to an error while the friction stir welding is performed as shown in a center portion of FIG. 6. In this case, if the first elastic member 61 is absent and the stir pin 60 is directly plunged into the to-be-joined members 2, the insertion amount of the stir pin 60 increases from that in the case where there is no error in the height of the to-be-joined members 2 with respect to the set value, by an amount corresponding to the increase in the height of the to-be-joined members 2. Meanwhile, when the joining is performed with the rotating tool 1 of the present embodiment, the increase in the height of the to-be-joined members 2 causes the stir pin 60 to receive upward reaction force from the to-be-joined members 2 and be pushed upward. Moreover, this upward pushing compresses the first elastic member 61, and the stir pin 60 is pushed downward by receiving downward elastic force from the first elastic member 61. The position of the stir pin 60 is changed to a position where the upward reaction force and the downward elastic force generated with the change in the height of the to-be-joined members 2 as descried above balance out. The first elastic member 61 is set such that that the insertion amount of the stir pin 60 in this case is about the same as the insertion amount in the case where there is no error in the height of the to-be-joined members 2 with respect to the set value. If the elastic force of the first elastic member 61 is too small, the upward reaction force generated with the change in the height of the to-be-joined members 2 becomes larger than the downward elastic force, and the insertion amount decreases. Meanwhile, if the elastic force of the first elastic member 61 is too large, the downward elastic force generated with the change in the height of the to-be-joined members 2 becomes larger than the upward rection force, and the insertion amount increases. Specifically, the first elastic member 61 is set such that, in the rotating tool 1, the stir pin 60 is inserted into the to-be-joined members 2 to the desired depth set according to the height of the set value of the to-be-joined members 2 even when the height of the to-be-joined members 2 fluctuates and increases.

Moreover, if the second elastic members 71 are absent and the shoulder 70 is directly plunged into the to-be-joined members 2, the insertion amount of the shoulder 70 increases from that in the case where there is no error in the height of the to-be-joined members 2 with respect to the set value, by an amount corresponding to the increase in the height of the to-be-joined members 2. Meanwhile, when the joining is performed with the rotating tool 1 of the present embodiment, the increase in the height of the to-be-joined members 2 causes the shoulder 7 to receive upward reaction force from the to-be-joined members 2 and be pushed upward. This upward pushing compresses the second elastic members 71, and the shoulder 70 is pushed downward by receiving downward elastic force from the second elastic members 71. The position of the shoulder 70 thereby is changed to a position where the upward reaction force and the downward elastic force generated with the change in the height of the to-be-joined members 2 balance out. The second elastic members 71 are set such that the shoulder 70 in this case is pressed against the to-be-joined members 2 in a manner similar to that in the case where there is no error in the height of the to-be-joined members 2 with respect to the set value. If the elastic force of the second elastic members 71 is too small, the upward reaction force generated with the change in the insertion depth becomes larger than the downward elastic force, pressing becomes insufficient, and the shoulder 70 thereby cannot suppress generation of a weld flash. Moreover, if the elastic force of the second elastic members 71 is too small, the upward reaction force generated with the change in the height of the to-be-joined members 2 becomes larger than the downward elastic force, pressing becomes insufficient, and defect occurs in the joining portion. Meanwhile, if the elastic force of the second elastic members 71 is too large, the downward elastic force generated with the change in the height of the to-be-joined members 2 becomes larger than the upward rection force, the insertion force increases, and the shoulder 70 is thereby inserted into the to-be-joined members 2. Specifically, the second elastic members 71 are set such that, in the rotating tool 1, the shoulder 70 presses the to-be-joined members 2 without being inserted into the to-be-joined members 2 in the state where the shoulder 70 is in contact with the to-be-joined members 2 even when the height of the to-be-joined members 2 fluctuates.

Moreover, when the height of the to-be-joined members 2 becomes smaller than the set value, as shown in a right portion of FIG. 6, the first elastic member 61 expands and the stir pin 60 descends. Moreover, the second elastic members 71 expand and the shoulder 70 descends. The first elastic member 61 is set such that, in the rotating tool 1, the stir pin 60 is inserted into the to-be-joined members 2 to the desired depth set according to the height of the set value of the to-be-joined members 2 even when the height of the to-be-joined members 2 fluctuates and decreases as described above. Moreover, the second elastic members 71 are set such that, in the rotating tool 1, the shoulder 70 presses the to-be-joined members 2 without being inserted into the to-be-joined members 2 in the state where the shoulder 70 is in contact with the to-be-joined members 2 even when the height of the to-be-joined members 2 fluctuates and decreases.

Then, at a stir pin pull-out position, the shoulder 70 first disengages from the to-be-joined members 2 as the rotating tool 1 is moved away from the to-be-joined members 2. When the rotating tool 1 is further moved away from the to-be-joined members 2, the insertion amount of the stir pin 60 gradually decreases. Then, when the rotating tool 1 is moved away from the to-be-joined members 2 even further, the stir pin 60 disengages from the to-be-joined members 2.

In the rotating tool 1, since the stir pin 60 is inserted into the to-be-joined members 2 to a constant depth by the action of the first elastic member 61 as described above, a plasticized region is formed to have a constant depth. Accordingly, stable joining quality can be obtained. Moreover, in the rotating tool 1, the friction stirring is performed by inserting the stir pin 60 into the to-be-joined members 2 while maintaining the state where the shoulder 70 is pressed against the to-be-joined members 2 by the action of the second elastic members 71. The shoulder 70 can thereby press the metal material overflowing from the insertion portion of the stir pin 60 by being subjected to the friction stirring by the stir pin 60. Accordingly, generation of a weld flash can be reduced.

### [1-4. Operations and Effects]

In the rotating tool 1, the joining device 3, and the joining method according to the present embodiment, the stir pin 60 provided to be movable in the axial direction of the rotating shaft 12 is biased by the first elastic member 61 toward the distal end side, and is thereby inserted to a predetermined depth depending on the elasticity of the first elastic member 61 when the distal end portion 62 of the stir pin 60 is inserted into the to-be-joined members 2. Setting the first elastic member 61 in consideration of the joining conditions such as the to-be-joined members and the joining mode allows the stir pin 60 to be inserted to the desired depth. In other words, the rotating tool 1 can perform quasi-load control using the first elastic member 61.

When a rotating tool with no elastic member is attached to a joining device such as, for example, a machining center that can perform only the position control, the supporting height of the rotating tool 1 is constant based on a value set by the machining center, and the insertion position of the stir pin 60 is substantially constant. Meanwhile, when the rotating tool 1 of the present embodiment is used, the first elastic member 61 expands and contracts as appropriate depending on the height of the to-be-joined members 2, and the stir pin 60 is moved in the axial direction even when the supporting height of the rotating tool 1 by the machining center is constant. Using the elasticity of the first elastic member 61 as described above enables load control in which the insertion depth of the stir pin 60 into the to-be-joined members 2 can be controlled.

Moreover, the rotating tool 1 includes the shoulder 70 that is arranged to receive no rotating force from the main body (rotating shaft 12) and to be movable in the axial direction of the rotating shaft 12 independently of the stir pin 60 and that presses the to-be-joined members 2. The shoulder 70 presses the metal material overflowing from the insertion portion of the stir pin 60 by being subjected to the friction stirring by the stir pin 60, and can thereby reduce the generation of a weld flash. The shoulder 70 can thereby improve the finish of the surface after the friction stir welding.

Furthermore, the rotating tool 1 includes the second elastic members 71 that bias the shoulder 70 toward the distal end side. This enables the load control of the shoulder 70 by using the second elastic members 71, and the finish of the surface after the friction stir welding can be further improved.

Regarding the load control, when the friction stirring is performed by using, for example, a compressed coil spring as the elastic member, there is a case where the stir pin can be inserted into a relatively-soft aluminum alloy such as 1000 series, but cannot be inserted into a hard aluminum alloy.

This is because compression of the compressed coil spring exceeding the maximum allowable amount (maximum deflection amount) needs to be avoided. In other words, it is difficult to apply load to the rotating tool at such a level that the deflection amount of the compressed coil spring exceeds the maximum deflection amount thereof. Specifically, it is difficult to insert the stir pin into hard to-be-joined members for which the compressed coil spring needs to compressed beyond its limit, while performing simple load control. If the deflection amount of the compressed coil spring exceeds the maximum deflection amount thereof, the spring may break at an early stage.

Incidentally, when the joining device 3 proceeds with the insertion while bringing the stir pin 60 into contact with the to-be-joined members 2 and increasing the load applied to the rotating tool 1 as at, for example, the start position of the friction stir welding, the reaction force that is generated (generated reaction force) and heat generated by friction heat increases as time elapses and the insertion amount increases. Normally, in the friction stir welding, softening of the material caused by the heat generation of the stir pin 60 does not catch up with the insertion of the stir pin 60, and the generated reaction force is highest at the point where the stir pin 60 is plunged to a predetermined depth. When the stir pin 60 is inserted into the to-be-joined members 2 to the predetermined depth and the plunging of the rotating tool 1 stops, the softening of the material caused by the heat generation of the stir pin 60 catches up with the insertion amount of the rotating tool 1, and this can reduce the load applied to the rotating tool 1, and reduce the generated reaction force. Such a state is referred to as "steady state".

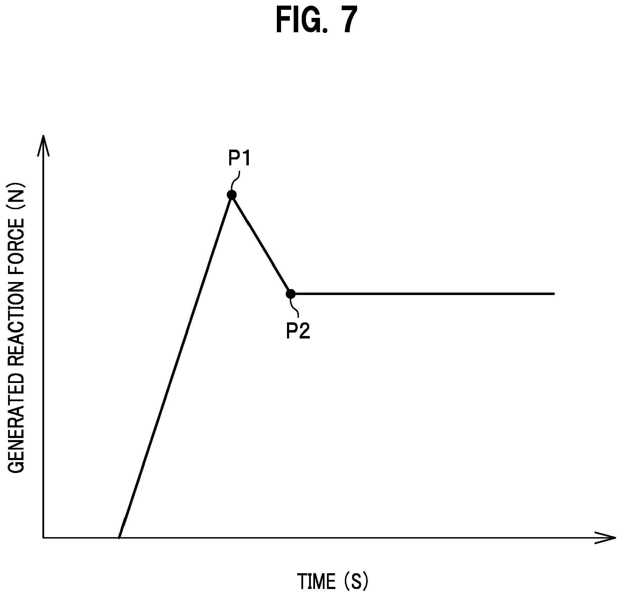

FIG. 7 is a graph showing time and the generated reaction force in the friction stir welding of the rotating tool according to the first embodiment. The point P1 shows a point where the stir pin 60 is plunged into the to-be-joined members 2 at the greatest degree at the start position of the friction stir welding. The point P2 shows a starting point of the steady state of the friction stir welding. The graph is a straight line rising toward the right side up to the point P1, and the straight line indicates a state where the stir pin 60 is plunged into the to-be-joined members 2. In the friction stir welding, the generated reaction force gradually increases and reaches its peak (point P1) in the plunging of the stir pin 60, slightly decreases according to proceeding of the stir pin 60, and then becomes substantially constant in the steady state (point P2).

The rotating tool 1 according to the present embodiment includes the first restriction member 100 that restricts the movement of the stir pin 60 toward the base end side in the axial direction and the second restriction members 110 that restrict the movement of the shoulder 70 toward the base end side in the axial direction. The first restriction member 100 and the second restriction members 110 restrict the movement of the stir pin 60 and the shoulder 70 within a range in which the amounts of deformation occurring in the first elastic member 61 and the second elastic members 71 do not exceed the maximum deflection amounts of the first elastic member 61 and the second elastic members 71 in the insertion of the rotating tool 1 at which the generated reaction force (load) is the largest and at positions where the shape of the to-be-joined members 2 greatly changes. Accordingly, it is possible to avoid the case where the first elastic member 61 and the second elastic members 71 are exceed their limits and deform even when the to-be-joined members 2 are relatively hard and large load is required. This allows the stir pin 60 to be inserted also into relatively-hard to-be-joined members 2 while using the first elastic member 61 and the second elastic members 71, and can also prevent breakage of the first elastic member 61, the second elastic members 71, and the rotating tool 1.

Moreover, the stir pin 60 is pressed against the to-be-joined members 2 in the state where the stir pin 60 restricted by the first restriction member 100 is supported by the first restriction member 100 (state where the first restriction member 100 is in contact with the first slide shaft 31 and the bottom portion 22a and is sandwiched therebetween), and the load applied by the joining device is applied to the stir pin 60 via the first restriction member 100. This allows the stir pin 60 to be inserted into the to-be-joined members 2.

Furthermore, the shoulder 70 can press the to-be-joined members 2 in a state where the shoulder 70 restricted by the second restriction members 110 is supported by the second restriction members 110 (state where the second restriction members 110 are in contact with the second slide shafts 51 and the bottom portions 42a, and sandwiched therebetween). Specifically, cooperation of the first restriction member 100 and the second restriction members 110 allows the stir pin 60 to be inserted into the relatively-hard to-be-joined members 2, and can also suppress generation of a weld flash by causing the to-be-joined members 2 to be pressed.

Then, in the steady state, the generated reaction force (load) is reduced, the support of the stir pin 60 by the first restriction member 100 is cancelled, and the stir pin 60 not restricted by the first restriction member 100 is allowed to move in the axial direction of the rotating shaft 12. Similarly, the support of the shoulder 70 by the second restriction members 110 is cancelled, and the shoulder 70 not restricted by the second restriction members 110 is allowed to move in the axial direction of the rotating shaft 12.

Moreover, the first elastic member 61 and the second elastic members 71 preferably have outer diameters and free lengths as small (short) as possible to prevent an increase in the size of the rotating tool 1. The smaller the free lengths of the first elastic member 61 and the second elastic members 71 are, the larger the spring constants tend to be, provided that the outer diameters of the first elastic member 61 and the second elastic members 71 are constant. Accordingly, insertion is facilitated also into the relatively-hard to-be-joined members 2. However, an increase of the spring constants increases the generated reaction force (load) with respect to a change amount, and the robustness thus decreases. Specifically, when the spring constants are increased, the stir pin 60 and the shoulder 70 are more likely to be affected by the first elastic member 61 and the second elastic members 71. Accordingly, there is a problem in which operations of the stir pin 60 and the shoulder 70 become unstable (less controllable) in the steady state.

In this respect, according the present embodiment, since the first restriction member 100 restricts the movement of the first slide shaft 31 and the second restriction members 110 restrict the movement of the second slide shafts 51, force can be transmitted to the stir pin 60 and the shoulder 70 via the first restriction member 100 and the second restriction members 110 without an increase of the spring constants of the first elastic member 61 and the second elastic members 71. This allows the stir pin 60 to be inserted also into the relatively-hard to-be-joined members 2, and allows the shoulder 70 to press also the relatively-hard to-be-joined members 2. Moreover, since the spring constants of the first elastic member 61 and the second elastic members 71 do not have to be increased by amounts corresponding to provision of the first restriction member 100 and the second restriction members 110, the degree of freedom in design of each elastic member increases, and it is possible to improve the robustness in the steady state and stably control the stir pin 60 and the shoulder 70.

The main body 10 further includes the cylindrical first holder 21 and the first slide shaft 31 that is housed in the center portion of the first holder 21 to be slidable in the rotating shaft direction and that rotates in synchronization with the first holder 21, and the stir pin 60 is provided at the distal end of the first slide shaft 31. This allows the stir pin 60 to slide in the rotating shaft direction while allowing the rotating force from the main body 10 to be transmitted to the stir pin 60.

In the rotating tool 1, the first elastic member 61 is housed inside the first holder 21, and is arranged between the base end portion of the first slide shaft 31 and the fixation portion side of the first holder 21. The first elastic member 61 is thereby located near an intermediate portion of the first slide shaft 31 and the stir pin 60, and the first elastic member 61 can receive the force received from the stir pin 60 side at the bottom portion 22a of the first holder 21. Accordingly, even if the first slide shaft 31 moves, the first elastic member 61 stably biases the stir pin 60 toward the distal end side, and the accuracy of the load control of the stir pin 60 can be thereby improved.

Moreover, the key grooves 23 are formed in the first holder 21, and the keys 32 are formed in the first slide shaft 31. The first slide shaft 31 and the stir pin 60 are thereby allowed to move in the axial direction in a stable state while rotating in synchronization with the rotation of the rotating shaft 12 and the first holder 21. Accordingly, the operation of the stir pin 60 is further stabilized.

Moreover, the main body 10 includes the second holder 41 and the second slide shafts 51. The shoulder 70 can rotate relative to the first holder 21 and the rotating shaft 12, and slide in the axial direction of the rotating shaft 12 stably in the not-rotating state.

The shoulder 70 has a cylindrical shape, the stir pin 60 is inserted through the hollow portion 72 of the shoulder 70, and the distal end portion 62 of the stir pin 60 protrudes downward beyond the distal end portion (distal end surface) 73 of the shoulder 70. Accordingly, the stir pin 60 can stably rotate inside the shoulder 70, and the distal end portion 73 of the shoulder 70 can press an area surrounding a friction stirring region.

Since the rotating tool 1 includes the holding unit 80 that holds the shoulder 70 in the not-rotating state, the shoulder 70 can be easily held in the not-rotating state, and the finish of the surface of the to-be-joined members 2 after the friction stir welding is further improved.

In the rotating tool 1, the first elastic member 61 is preferably an elastic member that applies elastic force by using at least one selected from a solid spring, a fluid spring, magnetic force, and electromagnetic force. According to such a configuration, the elasticity of the first elastic member 61 can be easily adjusted.

The joining device 3 includes the rotating tool 1, the power unit, and the position controller, and the friction stir welding on the to-be-joined members 2 is performed by causing the position controller to move the rotating tool 1 such that the rotating tool 1 is located at the predetermined height position relative to the to-be-joined members 2, and insert the stir pin 60 of the rotating tool 1 into the to-be-joined members 2 with the shoulder 70 of the rotating tool 1 pressed against the to-be-joined members 2. According to the present joining device 3, it is possible to perform the friction stir welding while performing the load control in which the insertion depth of the stir pin 60 into the to-be-joined members 2 is controlled by using the elasticity of the first elastic member 61. Moreover, causing the shoulder 70 to press the metal material overflowing from the insertion portion of the stir pin 60 by being subjected to the friction stirring by the stir pin 60 can reduce generation of a weld flash and improve the finish of the surface after the friction stir welding.

In the present joining method, the friction stir welding on the to-be-joined members 2 is performed by moving the rotating tool 1 such that the rotating tool 1 is located at the predetermined height position relative to the to-be-joined members 2 and inserting the rotating stir pin 60 into the to-be-joined members 2 with the shoulder 70 pressed against the to-be-joined members 2. According to the present joining method, it is possible to perform the friction stir welding while performing the load control in which the insertion depth of the stir pin 60 into the to-be-joined members 2 is controlled by using the elasticity of the first elastic member 61. Moreover, causing the shoulder 70 to press the metal material overflowing from the insertion portion of the stir pin 60 by being subjected to the friction stirring by the stir pin 60 can reduce generation of a weld flash and improve the finish of the surface after the friction stir welding.

As described above, according to the rotating tool 1, the joining device 3, and the joining method, even in the state where the rotating tool is attached to a machining center that performs only the position control, it is possible to perform the friction stir welding while performing the load control by using the first elastic member 61. Moreover, according to the rotating tool 1, the joining device 3, and the joining method, it is possible to insert the stir pin into a relatively-hard to-be-joined members while preventing the breakage of the first elastic member 61 and perform the friction stir welding while performing the load control by using the first restriction member 100.

### [2. Modified Example]

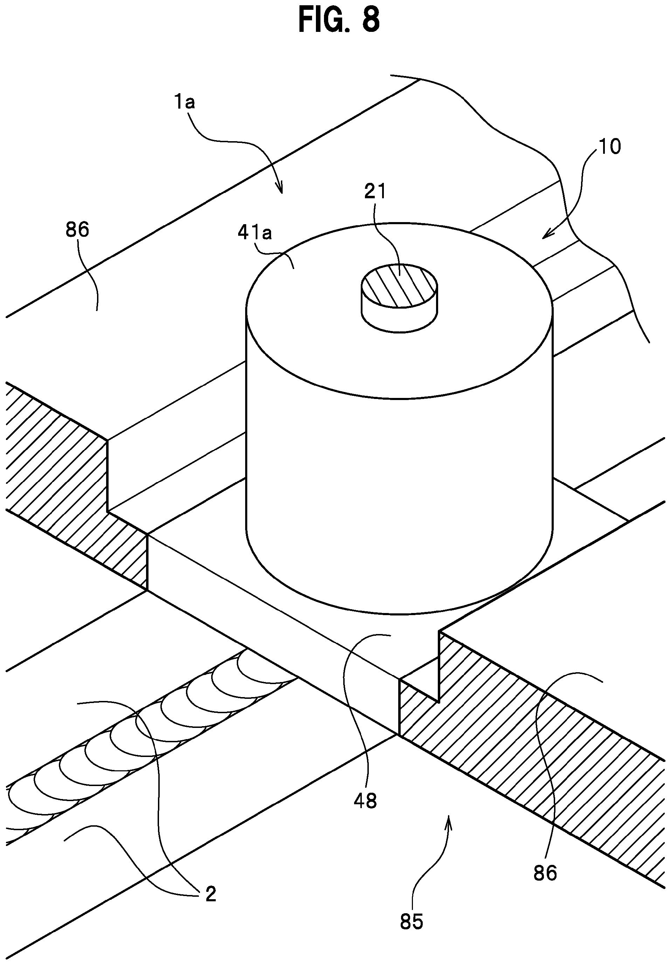

Next, a modified example of the holding unit is explained with reference to FIG. 8. As shown in FIG. 8, a holding unit 85 according to the modified example may have a shape in which a rectangle portion 48 having a rectangular outer shape is provided in a lower end portion of a second holder 41a and guide members 86 are provided along a movement trajectory of a rotating tool 1A. The guide members 86 are formed of elongating members, and are arranged on both sides of the rectangle portion 48 of the second holder 41a at an interval with a substantially the same length as the width of the rectangle portion 48 to sandwich the rectangle portion 48 from both sides. The guide members 86 are holding units included in the joining device 3. The second holder 41a with such a configuration moves along the movement trajectory without rotating while outer peripheral surfaces of the rectangle portion 48 slide on side surfaces of the guide members 86. Like the second holder 41 of FIG. 1, the stir pin 60, the first holder 21, and the bearing are inserted inside the second holder 41a. Since other configurations are similar to those in the rotating tool 1 of FIG. 1, the other configurations are denoted by the same reference numerals, and explanation thereof is omitted.

### [3. Second Embodiment]

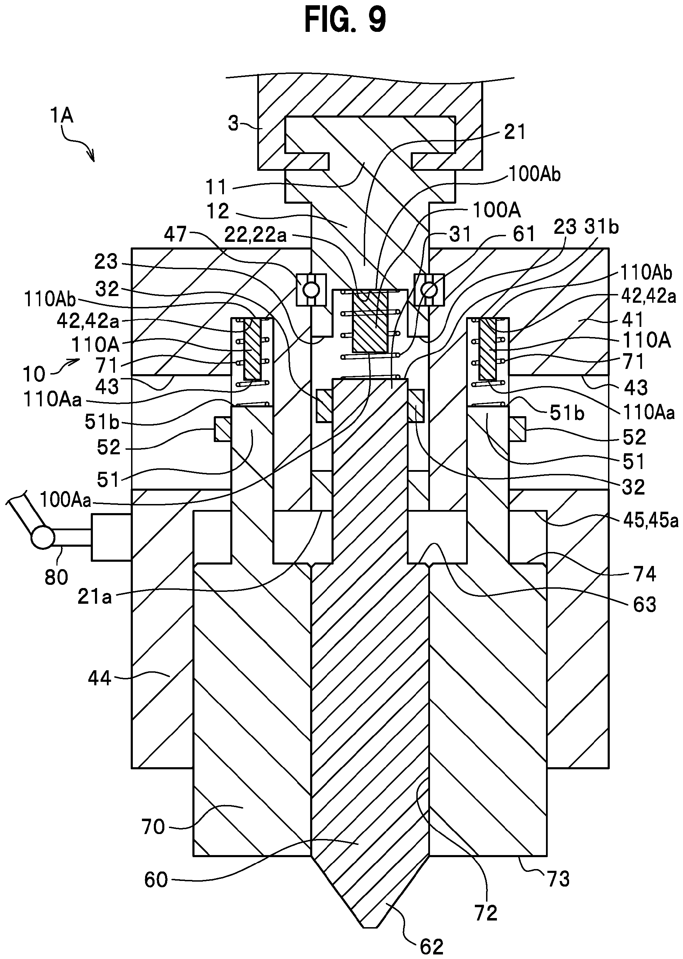

Next, a rotating tool 1A according to a second embodiment is explained with reference to FIG. 9. As shown in FIG. 9, the rotating tool 1A according to the second embodiment includes the stir pin 60, the first elastic member 61, the shoulder 70, the second elastic members 71, a first restriction member 100A, second restriction members 110A, and the main body 10 including the first holder 21, the first slide shaft 31, the second holder 41, and the second slide shafts 51. Since basic configurations are the same as those in the first embodiment, the basic configurations are denoted by the same reference numerals, and explanation thereof is omitted.

The first restriction member (first base end side fixed restriction member) 100A according to the present embodiment is provided by being fixed to the bottom portion 22a of the first housing recess portion 22. Specifically, a base end portion 100Ab of the first restriction member 100A and the bottom portion 22a are constantly connected to each other. Moreover, the second restriction members (second base end side fixed restriction members) 110A are fixed to the bottom portions 42a of the second housing recess portions 42. Specifically, base end portions 110Ab of the second restriction members 110A and the bottom portions 42a are constantly connected to one another.

Although specific drawings are omitted, with reference to FIG. 4, a distal end portion 100Aa of the first restriction member 100A and the base end portion 31b of the first slide shaft 31 come into contact with each other before the first elastic member 61 and the second elastic members 71 reach the maximum deflection amounts, and the movement of the first slide shaft 31 and the stir pin 60 toward the base end side can be restricted. Moreover, distal end portions 110Aa of the second restriction members 110A and the base end portions 51b of the second slide shafts 51 come into with one another, and the movement of the second slide shafts 51 and the shoulder 70 toward the base end side can be restricted.

The present embodiment can also provide effects substantially the same as those in the first embodiment. In addition, according to the present embodiment, the first restriction member 100A is provided in the bottom portion 22a of the first holder 21, and this can avoid the case where the restriction member and the first elastic member 61 come into contact with each other due to free moving of the restriction member inside the first holder 21. Similarly, the second restriction members 110A are provided in the bottom portions 42a of the second holder 41, and this can avoid the case where the restriction members and the second elastic members 71 come into contact with one another due to free moving of the restriction members inside the second holder 41. Moreover, since the first restriction member 100A can be fixed at a fixed position, the distal end portion 100Aa of the first restriction member 100A and the base end portion 31b of the first slide shaft 31 can be brought into contact at a certain position, and the rotating tool 1A can receive the reaction force generated with the insertion of the rotating tool 1A at a predetermined position, and perform a stable operation.

### [4. Third Embodiment]

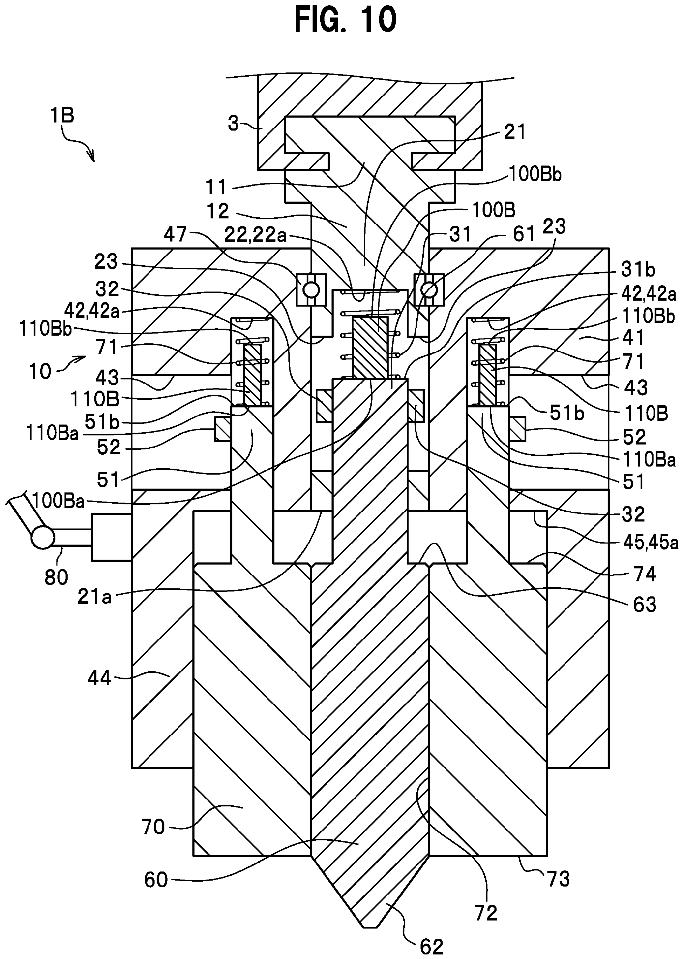

Next, a rotating tool 1B according to a third embodiment is explained with reference to FIG. 10. As shown in FIG. 10, the rotating tool 1B according to the third embodiment includes the stir pin 60, the first elastic member 61, the shoulder 70, the second elastic members 71, a first restriction member 100B, second restriction members 110B, and the main body 10 including the first holder 21, the first slide shaft 31, the second holder 41, and the second slide shafts 51. Since basic configurations are the same as those in the first embodiment, the basic configurations are denoted by the same reference numerals, and explanation thereof is omitted.

The first restriction member (first distal end side fixed restriction member) 100B according to the present embodiment is provided by being fixed to the base end portion 31b of the first slide shaft 31. Specifically, a distal end portion 100Ba of the first restriction member 100B and the base end portion 31b of the first slide shaft 31 are constantly connected to each other. Moreover, second restriction members (second distal end side fixed restriction members) 110B are fixed to the base end portions 51b of the second slide shafts 51. Specifically, distal end portions 110Ba of the second restriction members 110B and the base end portions 51b of the second slide shafts 51 are constantly connected to one another.

Although specific drawings are omitted, with reference to FIG. 4, a base end portion 100Bb of the first restriction member 100B and the bottom portion 22a of the first housing recess portion 22 come into contact with each other before the first elastic member 61 and the second elastic members 71 reach the maximum deflection amounts, and the movement of the first slide shaft 31 and the stir pin 60 toward the base end side can be restricted. Moreover, base end portions 110Bb of the second restriction members 110B and the bottom portions 42a of the second housing recess portions 42 come into contact with one another, and the movement of the second slide shafts 51 and the shoulder 70 toward the base end side can be restricted.

The present embodiment can also provide effects substantially the same as those in the first embodiment. In addition, according to the present embodiment, the first restriction member 100B is provided in the first slide shaft 31, and this can avoid the case where the restriction member and the first elastic member 61 come into contact with each other due to free moving of the restriction member inside the first holder 21. Similarly, the second restriction members 110B are provided in the second slide shafts 51, and this can avoid the case where the restriction members and the second elastic members 71 come into contact with one another due to free moving of the restriction members inside the second holder 41. Moreover, since the first restriction member 100B can be fixed at a fixed position, the base end portion 100Bb of the first restriction member 100B and the bottom portion 22a of the first holder 21 can be brought into contact at a certain position, and the rotating tool 1B can receive the reaction force generated with the insertion of the rotating tool 1B at a predetermined position, and perform a stable operation.

### [5. Fourth Embodiment]

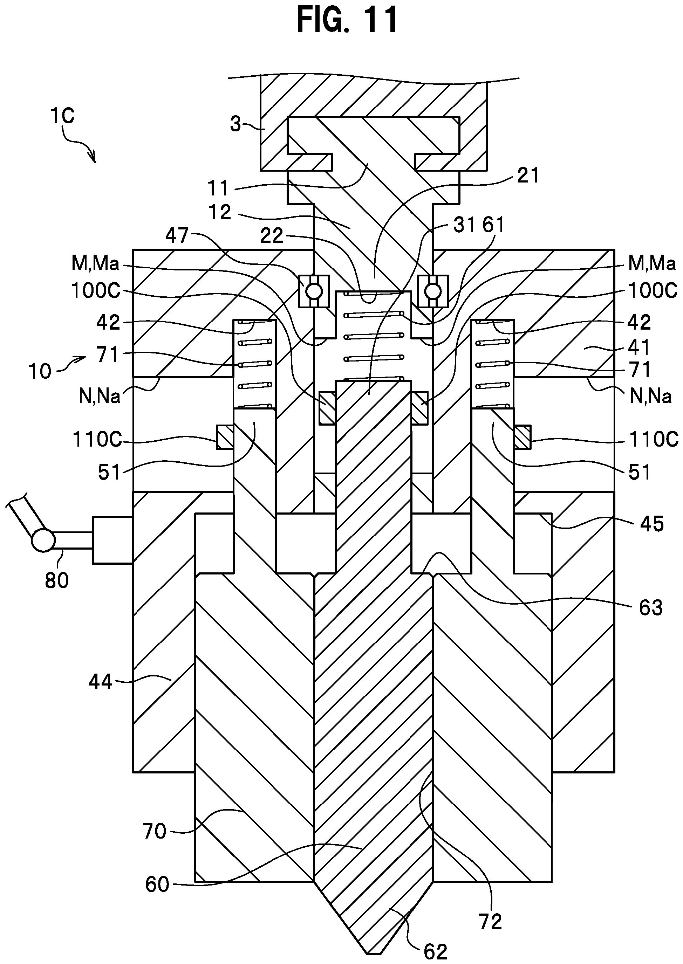

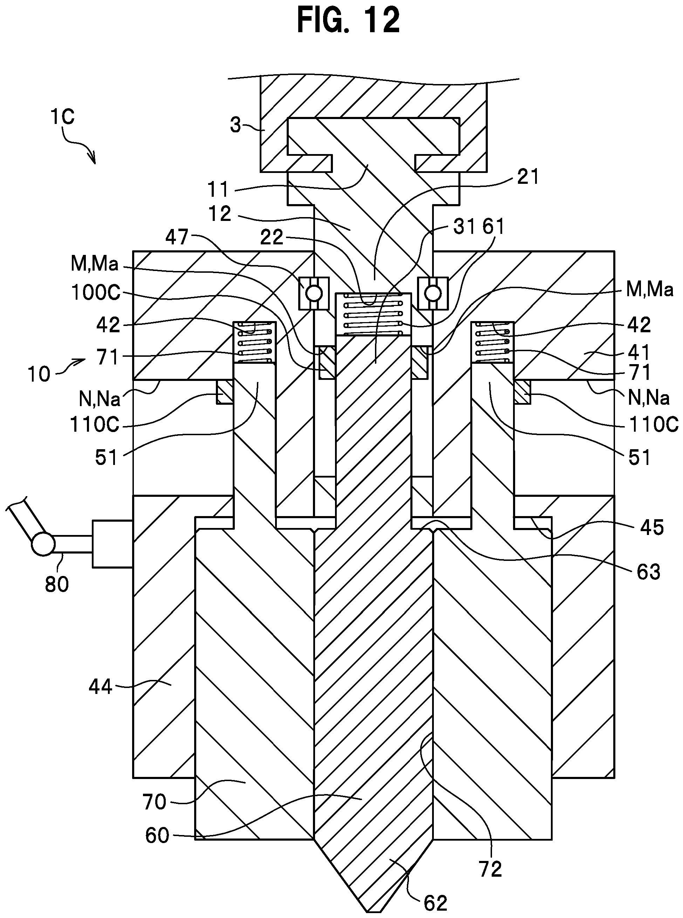

Next, a rotating tool 1C according to a fourth embodiment is explained with reference to FIGs. 11 and 12. The rotating tool 1C according to the fourth embodiment includes the stir pin 60, the first elastic member 61, the shoulder 70, the second elastic members 71, first restriction members 100C, second restriction members 110C, and the main body 10 including the first holder 21, the first slide shaft 31, the second holder 41, and the second slide shafts 51. Since basic configurations are the same as those in the first embodiment, the basic configurations are denoted by the same reference numerals, and explanation thereof is omitted.

The first restriction members (first intermediate restriction members) 100C according to the present embodiment are provided by being fixed to the outer peripheral surface (side surface portion) of the first slide shaft 31. The first restriction members 100C are plate-shaped members protruding out in a radially-outward direction, perpendicularly from the outer peripheral surface of the first slide shaft 31. One or multiple first restriction members 100C may be formed. The first restriction members 100C are formed to move inside through-holes M in the axial direction with the movement of the first slide shaft 31, the through-holes M penetrating the first holder 21 in a radially-outward direction thereof. As shown in FIG. 12, the first restriction members 100C and hole walls (intermediate portion of the first holder) Ma of the through-holes M on the base end side come into contact with one another before the first elastic member 61 reaches the maximum deflection amount, and the movement of the first slide shaft 31 and the stir pin 60 toward the base end side can be restricted.

The second restriction members (second intermediate restriction members) 110C are fixed to the outer peripheral surfaces of the second slide shafts 51. The second restriction members 110C are plate-shaped members protruding out in the radially-outward direction, perpendicularly from the outer peripheral surfaces of the second slide shafts 51. One or multiple second restriction members 110C may be formed. The second restriction members 110C are formed to move inside through-holes N in the axial direction with the movement of the second slide shafts 51, the through-holes N penetrating the second holder 41 in a radially-outward direction of second holder 41. As shown in FIG. 12, the second restriction members 110C and hole walls (intermediate portion of the second holder) Na of the through-holes N on the base end side come into contact with one another before the second elastic members 71 reach the maximum deflection amount, and the movement of the second slide shafts 51 and the shoulder 70 toward the base end side can be restricted.

Note that, although the through-holes M of the first holder 21 are set as the "intermediate portion" in the present embodiment, it is possible to set other portions of the first holder 21 as the "intermediate portion" and bring the intermediate portion and the first restriction members 100C into contact with one another. Similarly, although the through-holes N of the second holder 41 are set as the "intermediate portion" in the present embodiment, it is possible to set other portions of the second holder 41 as the "intermediate portion" and bring the intermediate portion and the second restriction members 110C into contact with each other. Moreover, the "intermediate portion" may be groove portions instead of the through-holes. Furthermore, the through-holes M and the first restriction members 100C may be achieved by the key grooves 23 and the keys 32. Moreover, the through-holes N and the second restriction members 110C may be achieved by the key grooves 43 and the keys 52.

The present embodiment can also provide effects substantially the same as those in the first embodiment. In addition, according to the present embodiment, the first restriction members 100C and the second restriction members 110C are provided on the outer peripheral surface of the first slide shaft 31 and the outer peripheral surfaces of the second slide shafts 51, and can thereby avoid interference with the first elastic member 61 and the second elastic members 71 housed inside the first holder 21 and the second holder 41. Accordingly, for example, even when the restriction members cannot be housed inside the first holder 21 and the second holder 41 together with the elastic members due to effects of the structures, shapes, operations, or functions of the elastic members, the first restriction members 100C and the second restriction members 110C provided on the outer peripheral surfaces can restrict the movement of the stir pin 60 and the shoulder 70. Thus, the degree of freedom in design can be improved.

### [6. Fifth Embodiment]

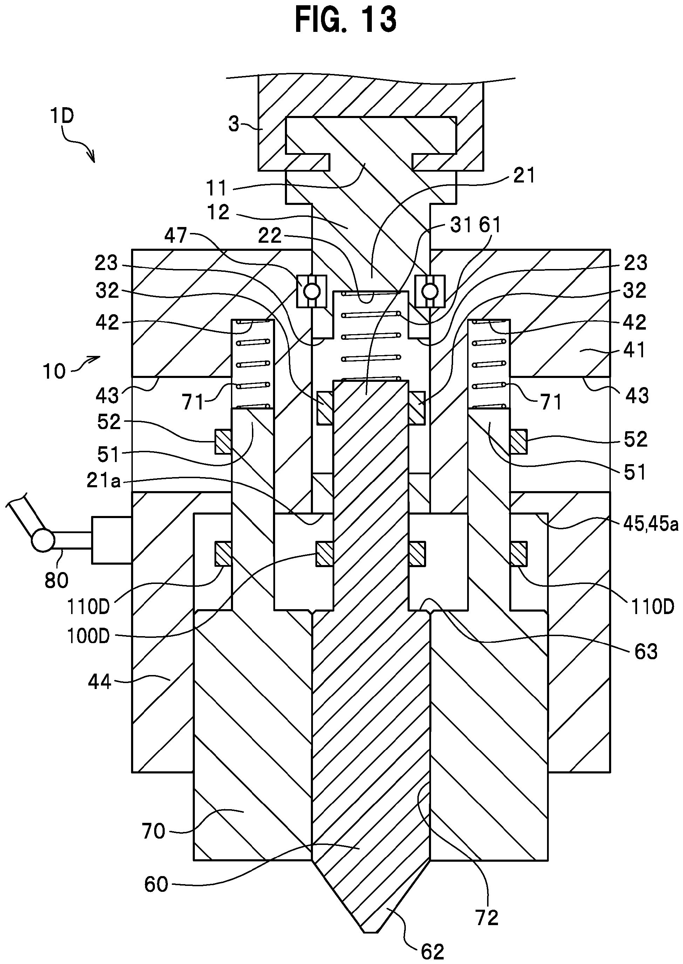

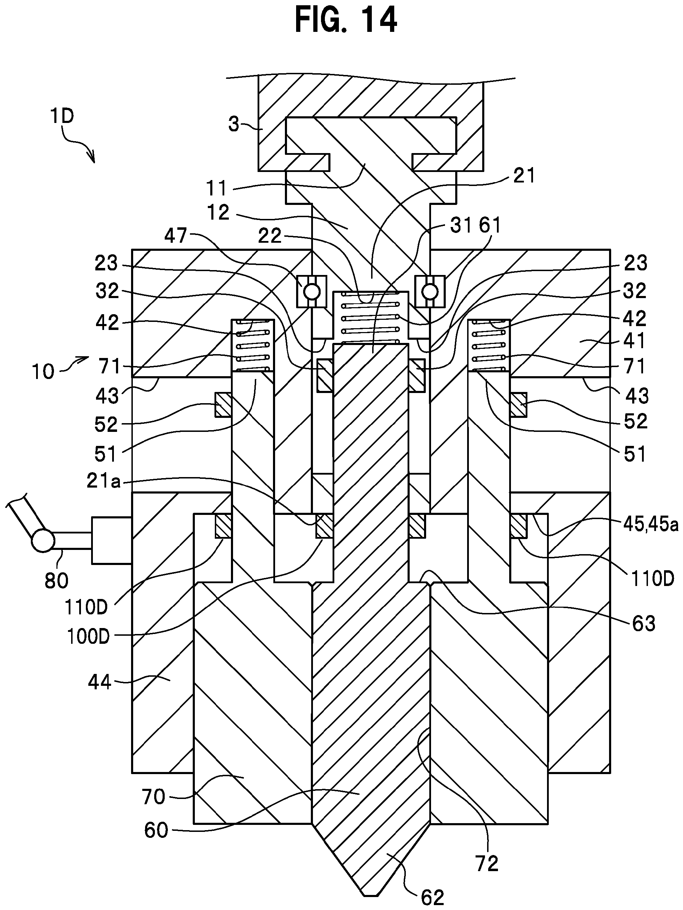

Next, a rotating tool 1D according to a fifth embodiment is explained with reference to FIGs. 13 and 14. The rotating tool 1D according to the fifth embodiment includes the stir pin 60, the first elastic member 61, the shoulder 70, the second elastic members 71, first restriction members 100D, second restriction members 110D, and the main body 10 including the first holder 21, the first slide shaft 31, the second holder 41, and the second slide shafts 51. Since basic configurations are the same as those in the above-mentioned embodiments, the basic configurations are denoted by the same reference numerals, and explanation thereof is omitted.

The first restriction members (first distal end side restriction members) 100D according to the present embodiment are provided by being fixed to the outer peripheral surface of the first slide shaft 31 on the distal end side. The first restriction members 100D are plate-shaped members protruding out in the radially-outward direction, perpendicularly from the outer peripheral surface of the first slide shaft 31. One or multiple first restriction members 100D may be formed. As shown in FIG. 14, the first restriction members 100D and the distal end portion 21a of the first holder 21 come into contact with one another before the first elastic member 61 reaches the maximum deflection amount, and the movement of the first slide shaft 31 and the stir pin 60 toward the base end side can be restricted.

The second restriction members (second distal end side restriction members) 110D are fixed to the outer peripheral surfaces of the second slide shafts 51 on the distal end side. The second restriction members 110D are plate-shaped members protruding out in the radially-outward direction, perpendicularly from the outer peripheral surfaces of the second slide shafts 51. One or multiple second restriction members 110D may be formed. As shown in FIG. 14, the second restriction members 110D and the bottom portion 45a of the shoulder housing recess portion 45 in the second holder 41 (distal end portion of the second holder 41) come into contact with one another before the second elastic members 71 reach the maximum deflection amount, and the movement of the second slide shafts 51 and the shoulder 70 toward the base end side can be restricted.

The present embodiment can also provide effects substantially the same as those in the first embodiment. In addition, according to the present embodiment, the first restriction members 100D and the second restriction members 110D are provided on the outer peripheral surface of the first slide shaft 31 and the outer peripheral surfaces of the second slide shafts 51, and can thereby avoid interference with the first elastic member 61 and the second elastic members 71 housed inside the first holder 21 and the second holder 41. Accordingly, for example, even when the restriction members cannot be housed inside the first holder 21 and the second holder 41 together with the elastic members due to effects of the structures, shapes, operations, or functions of the elastic members, the first restriction members 100D and the second restriction members 110D provided on the outer peripheral surfaces can restrict the movement of the stir pin 60 and the shoulder 70. Thus, the degree of freedom in design can be improved. Moreover, according to the present embodiment, in contrast to the case where the through-holes M and the first restriction members 100C are achieved by the key grooves 23 and the keys 32 and the first restriction members 100C and the key grooves 23 come into contact with one another, application of load to the key grooves 23 can be avoided because the first restriction members 100D and the distal end portion 21a of the first holder 21 come into contact with one another.

### [7. Sixth Embodiment]

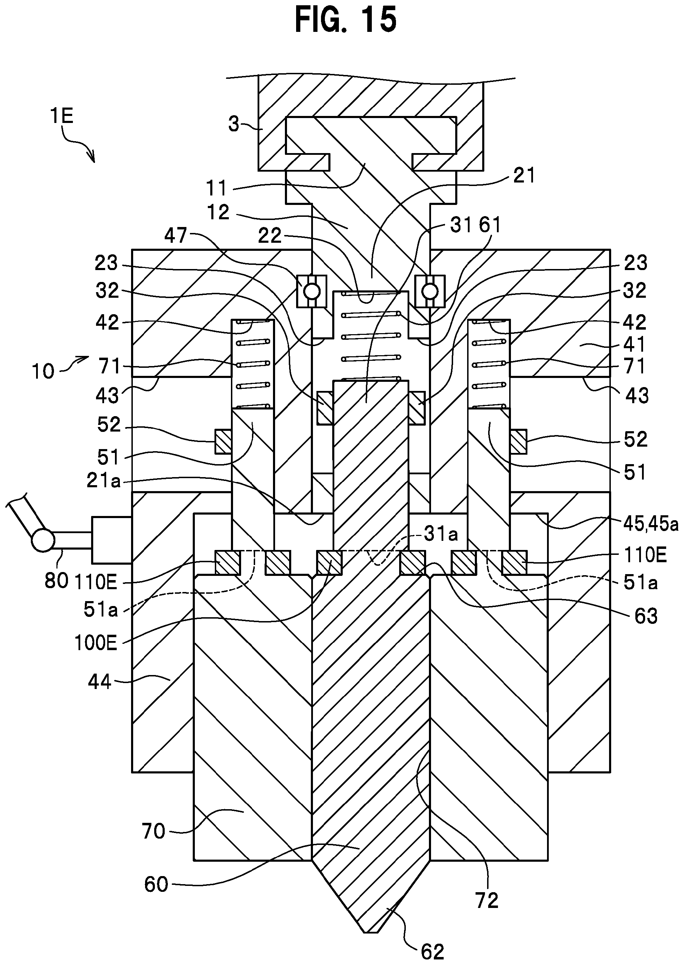

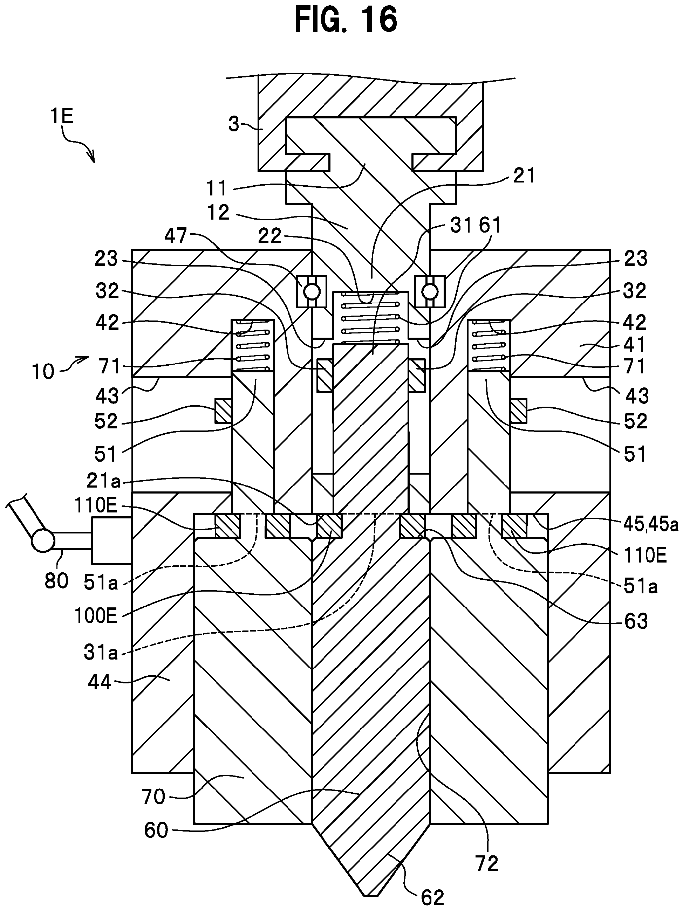

Next, a rotating tool 1E according to a sixth embodiment is explained with reference to FIGs. 15 and 16. The rotating tool 1E according to the sixth embodiment includes the stir pin 60, the first elastic member 61, the shoulder 70, the second elastic members 71, first restriction members 100E, second restriction members 110E, and the main body 10 including the first holder 21, the first slide shaft 31, the second holder 41, and the second slide shafts 51. Since basic configurations are the same as those in the first embodiment, the basic configurations are denoted by the same reference numerals, and explanation thereof is omitted.

The first restriction members (first distal end portion restriction members) 100E according to the present embodiment are provided by being fixed to a distal end portion 31a of the first slide shaft 31. The first restriction members 100E protrude outward beyond the outer peripheral surface of the first slide shaft 31. One or multiple first restriction members 100E may be formed.

The second restriction members (second distal end portion restriction members) 110E are fixed to distal end portions 51a of the second slide shafts 51. The second restriction members 110E protrudes outward beyond the outer peripheral surfaces of the second slide shafts 51. One or multiple second restriction members 110E may be formed.

As shown in FIG. 16, the first restriction members 100E and the distal end portion 21a of the first holder 21 come into contact with one another before the first elastic member 61 reaches the maximum deflection amount, and the movement of the first slide shaft 31 and the stir pin 60 toward the base end side can be restricted. Moreover, the second restriction members 110E and the bottom portion 45a of the shoulder housing recess portion 45 in the second holder 41 (distal end portion of the second holder 41) come into contact with one another before the second elastic members 71 reach the maximum deflection amount, and the movement of the second slide shafts 51 and the shoulder 70 toward the base end side can be restricted.

The present embodiment can also provide effects substantially the same as those in the first embodiment. In addition, according to the present embodiment, the first restriction members 100E and the second restriction members 110E are provided in the distal end portions of the first slide shaft 31 and the second slide shafts 51, and can thereby avoid interference with the first elastic member 61 and the second elastic members 71 housed inside the first holder 21 and the second holder 41. Accordingly, for example, even when the restriction members cannot be housed inside the first holder 21 and the second holder 41 together with the elastic members due to effects of the structures, shapes, operations, or functions of the elastic members, the first restriction members 100E and the second restriction members 110E provided in the distal end portions can restrict the movement of the stir pin 60 and the shoulder 70. Thus, the degree of freedom in design can be improved. Moreover, according to the present embodiment, in contrast to the case where the through-holes M and the first restriction members 100C are achieved by the key grooves 23 and the keys 32 and the first restriction members 100C and the key grooves 23 come into contact with one another, application of load to the key grooves 23 can be avoided because the first restriction members 100E and the distal end portion 21a of the first holder 21 come into contact with one another.

### [8. Seventh Embodiment]

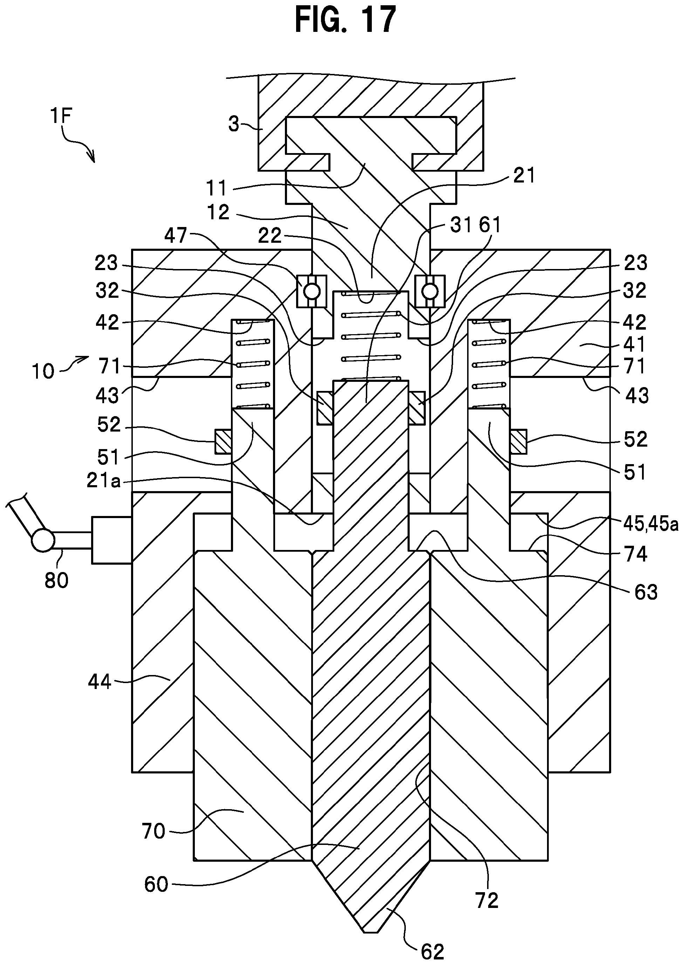

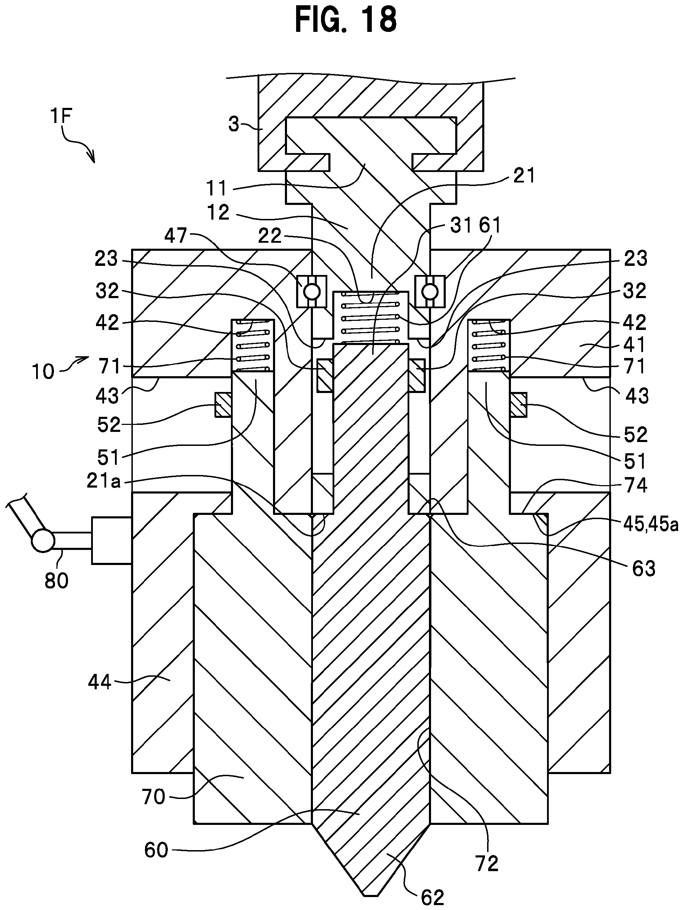

Next, a rotating tool 1F according to a seventh embodiment is explained with reference to FIGs. 17 and 18. The rotating tool 1F according to the seventh embodiment includes the stir pin 60, the first elastic member 61, the shoulder 70, the second elastic members 71, and the main body 10 including the first holder 21, the first slide shaft 31, the second holder 41, and the second slide shafts 51. Since basic configurations are the same as those in the first embodiment, the basic configurations are denoted by the same reference numerals, and explanation thereof is omitted.

In the present embodiment, the stir pin 60 is the first restriction member. Moreover, the shoulder 70 is the second restriction member. The outer diameter of the base end portion 63 of the stir pin 60 is larger than the outer diameter of the first slide shaft 31. Moreover, the outer diameter of the base end portion 63 of the stir pin 60 is larger than the inner diameter of the first housing recess portion 22 of the first holder 21. Furthermore, the outer diameter of the base end portion 74 of the shoulder 70 is larger than the outer diameter of the second slide shafts 51. Moreover, the width of the base end portion 74 of the shoulder 70 is larger than the width of the second housing recess portions 42. As shown in FIG. 18, the base end portion 63 of the stir pin 60 and the distal end portion 21a of the first holder 21 come into contact with each other before the first elastic member 61 reaches the maximum deflection amount, and the movement of the first slide shaft 31 and the stir pin 60 toward the base end side can be restricted.

Moreover, the base end portion 74 of the shoulder 70 and the bottom portion 45a of the shoulder housing recess portion 45 of the second holder 41 (distal end portion of the second holder 41) come into contact with each other before the second elastic members 71 reach the maximum deflection amount, and the movement of the second slide shafts 51 and the shoulder 70 toward the base end side can be restricted.

The present embodiment can also provide effects substantially the same as those in the first embodiment. In addition, according to the present embodiment, the stir pin 60 and the shoulder 70 function as the restriction members, and can thereby avoid interference with the first elastic member 61 and the second elastic members 71 housed inside the first holder 21 and the second holder 41. Accordingly, for example, even when the restriction members cannot be housed inside the first holder 21 and the second holder 41 together with the elastic members due to effects of the structures, shapes, operations, or functions of the elastic members, the stir pin 60 and the shoulder 70 can restrict the movement of the stir pin 60 and the shoulder 70 themselves. Thus, the degree of freedom in design can be improved.

### [9. Others]

Although the embodiments of the present invention have been explained above, appropriate design changes can be made within such a scope that the changes are not against the spirit of the present invention. In the above embodiments, the key grooves 23 are formed in the first holder 21, and the keys 32 are formed in the first slide shaft 31. However, the present invention is not limited to this configuration. The configuration may be such that the keys are formed in the first holder 21, and the key grooves are formed in the first slide shaft 31. Moreover, similarly, in the second holder 41 and the second slide shafts 51, the position relationships of the keys and the key grooves may be reversed such that the keys are formed in the second holder 41 and the key grooves are formed in the second slide shafts 51. Operations and effects similar to those in the above embodiments can be obtained also in this case.

Moreover, in the above embodiments, the case where the rotating tool 1 includes the holding unit 80 fixed to the second holder 41 and this holding unit is connected to the joining device 3 to hold the shoulder 70 in the not-rotating state is described as an example. However, the present invention is not limited to this configuration. For example, the configuration may be such that the joining device 3 includes a rod-shaped arm member fixed to the fixed system of the joining device 3 as a second holding unit and this second holding unit is connected to the second holder 41 of the rotating tool 1 to hold the shoulder 70 in the not-rotating state. This second holding unit is included in the joining device 3. Moreover, the configuration may be as follows. The rotating tool 1 includes a rod-shaped arm member fixed to the second holder 41 as the holding unit 80, the joining device 3 includes a rod-shaped arm member fixed to the fixed system of the joining device 3 as the second holding unit, and both holding units are connected to each other to hold shoulder 70 in the not-rotating state. These holding units are included in the rotating tool 1 and the joining device 3. As described above, the holding unit included in the rotating tool 1 and the second holding unit included in the joining device 3 and configured to operate by cooperating with the holding unit included in the rotating tool 1 may be provided at the same time. Moreover, fixing means may have a different shape such as a rod-shaped arm member (included in the rotating tool 1) fixed to the shoulder 70 or a rod-shaped member (included in the joining device 3) connecting the fixed system of the joining device 3 and the shoulder 70 to each other, as the holding unit 80. As described above, including the second holding unit configured to hold the shoulder 70 in the not-rotating state in the present joining device 3 can facilitate the holding of the shoulder 70 in the not-rotating state and further improve the finish of the surface of the to-be-joined members 2 after the friction stir welding.

Furthermore, the first elastic member 61 may be arranged at any location as long as it is a location where the first elastic member 61 biases the stir pin 60 toward the distal end side. Moreover, the arrangement of the restriction members may be changed depending on the arrangement of the first elastic member 61. For example, the first elastic member 61 may be arranged to surround a lower portion of the first slide shaft 31, and provided between the distal end portion 21a of the first holder 21 and the base end portion 63 of the stir pin 60. Moreover, the second elastic members 71 may be similarly arranged to surround lower portions of the second slide shafts 51, and provided between the bottom portion 45a of the shoulder housing recess portion 45 (distal end portion of the second holder 41) and the base end portion 74 of the shoulder 70. In such a case, the first elastic member 61 is located near the intermediate portion of the first slide shaft 31 and the stir pin 60, and the first elastic member 61 acts evenly in the circumferential direction of the first slide shaft 31. Accordingly, even if the first slide shaft 31 moves, the first elastic member 61 stably biases the stir pin 60 toward the distal end side. Thus, accuracy of load control of the stir pin 60 can be improved.

In the above embodiment, the case where the distal end portion 62 of the stir pin 60 protrudes downward beyond the distal end portion 73 of the shoulder 70 is explained as an example. However, the present invention is not limited to this configuration. The distal end portion 73 of the shoulder 70 may protrude downward beyond the distal end portion 62 of the stir pin 60 in the state where the rotating tool 1 is not in contact with the to-be-joined members 2. The stir pin 60 is thereby made to disengage from the to-be-joined members 2 before the shoulder 70, in the state where the shoulder 70 presses the to-be-joined members 2, when the rotating tool 1 is moved away from the to-be-joined members 2 in the pull-out of the rotating tool 1 from the to-be-joined members 2. In this case, pulling out the stir pin 60 while maintaining the state where the shoulder 70 presses the to-be-joined members 2 allows the shoulder 70 to press the metal material that has become fluid and is overflowing due to the insertion of the stir pin 60. Accordingly, a pull-out hole formed in the pull-out of the stir pin 60 can be more easily filled with the metal material pressed by the shoulder 70. Particularly, formation of the pull-out hole can be more easily prevented in the case where spot friction stirring is performed in which joining is performed at a position where the rotating tool 1 is inserted in the friction stir welding and the rotating tool 1 is pulled out without being moved from the insertion position.

Moreover, in the present embodiment, the case where the first restriction member 100 has the cylindrical column shape and is arranged in the hollow portion of the first elastic member 61 is explained as an example. Moreover, the case where the second restriction members 110 are arranged in the hollow portions of the second elastic members 71 is explained as an example. The first restriction member may have a tubular shape with an inner diameter larger than the outer diameter of the first elastic member 61. In this case, the configuration may be such that the first elastic member 61 is arranged inside the first restriction member, and the first restriction member is arranged to cover the outside of the first elastic member 61. Moreover, the second restriction members may have a tube shape with an inner diameter larger than the outer diameter of the second elastic members 71. In this case, the configuration may be such that the second elastic members 71 are arranged inside the second restriction members, and the second restriction members are arranged to cover the outsides of the second elastic members 71.

### Reference Signs List

- 1: rotating tool
- 2: to-be-joined members
- 3: joining device
- 10: main body
- 11: fixation portion
- 12: rotating shaft
- 21: first holder
- 23: key groove
- 31: first slide shaft
- 32: key
- 41: second holder
- 43: key groove
- 51: second slide shaft
- 52: key
- 60: stir pin
- 61: first elastic member
- 70: shoulder
- 71: second elastic member
- 80: holding unit
- 100: first restriction member
- 110: second restriction member

## Claims

1. A rotating tool used in a joining device configured to perform friction stir welding of to-be-joined members, the rotating tool comprising:
a main body including a fixation portion that is attached and fixed to the joining device and a rotating shaft that transmits rotating force from the joining device;
a stir pin arranged in the main body to be rotatable by receiving the rotating force from the main body and be movable in an axial direction of the rotating shaft, the stir pin configured to perform friction stirring on the to-be-joined members by being inserted into the to-be-joined members;
a shoulder formed of a body separate from the stir pin and arranged in the main body to receive no rotating force from the main body and be movable in the axial direction of the rotating shaft independently of the stir pin, the shoulder configured to press the to-be-joined members in a state where the shoulder is in contact with the to-be-joined members;
a first elastic member configured to bias the stir pin toward a distal end side in the axial direction of the rotating shaft; and
a first restriction member configured to restrict movement of the stir pin toward a based end side in the axial direction of the rotating shaft, wherein
the first restriction member restricts the movement of the stir pin such that an amount of deformation occurring in the first elastic member with the movement of the stir pin does not exceed a maximum allowable amount of the first elastic member.

2. The rotating tool according to claim 1, further comprising:
a second elastic member configured to bias the shoulder toward the distal end side in the axial direction of the rotating shaft; and
a second restriction member configured to restrict movement of the shoulder toward the base end side in the axial direction of the rotating shaft, wherein
the second restriction member restricts the movement of the shoulder such that an amount of deformation occurring in the second elastic member with the movement of the shoulder does not exceed a maximum allowable amount of the second elastic member.

3. The rotating tool according to claim 2, wherein
the main body further includes a first holder that has a hollow tube shape and that is attached to the rotating shaft and a first slide shaft that is housed in a center portion of the first holder to be slidable in a rotating shaft direction and that rotates in synchronization with the first holder,
the stir pin is provided at a distal end of the first slide shaft,
the first slide shaft is biased toward a distal end side of the stir pin via the first elastic member, and
the first restriction member restricts movement of the first slide shaft toward the base end side in the axial direction of the rotating shaft.

4. The rotating tool according to claim 3, wherein
the main body further includes a second holder that has a hollow tube shape and that is provided on an outer periphery of the first holder to be rotatable relative to the first holder and a second slide shaft that is housed inside the second holder to be slidable in the axial direction of the rotating shaft,
the shoulder is provided at a distal end of the second slide shaft,
the second slide shaft is biased toward a distal end side of the shoulder via the second elastic member, and
the second restriction member restricts movement of the second slide shaft toward the base end side in the axial direction of the rotating shaft.

5. The rotating tool according to claim 3, wherein
the first restriction member is provided in the first holder, and
the movement of the first slide shaft is restricted by contact of a base end portion of the first slide shaft and a bottom portion of the first holder on the base end side with the first restriction member that occurs with the movement of the first slide shaft.

6. The rotating tool according to claim 4, wherein
the second restriction member is provided in the second holder, and
the movement of the second slide shaft is restricted by contact of a base end portion of the second slide shaft and a bottom portion of the second holder on the base end side with the second restriction member that occurs with the movement of the second slide shaft.

7. The rotating tool according to claim 3, wherein
the first restriction member is provided in a bottom portion of the first holder on the base end side, and
the movement of the first slide shaft is restricted by contact of a base end portion of the first slide shaft with the first restriction member that occurs with the movement of the first slide shaft.

8. The rotating tool according to claim 4, wherein
the second restriction member is provided in a bottom portion of the second holder on the base end side, and
the movement of the second slide shaft is restricted by contact of a base end portion of the second slide shaft with the second restriction member that occurs with the movement of the second slide shaft.

9. The rotating tool according to claim 3, wherein
the first restriction member is provided in a base end portion of the first slide shaft, and
the movement of the first slide shaft is restricted by contact of a bottom portion of the first holder on the base end side with the first restriction member that occurs with the movement of the first slide shaft.

10. The rotating tool according to claim 4, wherein
the second restriction member is provided in a base end portion of the second slide shaft, and
the movement of the second slide shaft is restricted by contact of a bottom portion of the second holder on the base end side with the second restriction member that occurs with the movement of the second slide shaft.

11. The rotating tool according to claim 3, wherein
the first restriction member is provided on an outer peripheral surface of the first slide shaft, and
the movement of the first slide shaft is restricted by contact of the first restriction member with an intermediate portion of the first holder that occurs with the movement of the first slide shaft.

12. The rotating tool according to claim 4, wherein
the second restriction member is provided on an outer peripheral surface of the second slide shaft, and
the movement of the second slide shaft is restricted by contact of the second restriction member with an intermediate portion of the second holder that occurs with the movement of the second slide shaft.

13. The rotating tool according to claim 3, wherein
the first restriction member is provided on an outer peripheral surface of the first slide shaft, and
the movement of the first slide shaft is restricted by contact of the first restriction member with a distal end portion of the first holder that occurs with the movement of the first slide shaft.

14. The rotating tool according to claim 4, wherein
the second restriction member is provided on an outer peripheral surface of the second slide shaft, and
the movement of the second slide shaft is restricted by contact of the second restriction member with a distal end portion of the second holder that occurs with the movement of the second slide shaft.

15. The rotating tool according to claim 3, wherein
the first restriction member is provided in a distal end portion of the first slide shaft, and
the movement of the first slide shaft is restricted by contact of the first restriction member with a distal end portion of the first holder that occurs with the movement of the first slide shaft.

16. The rotating tool according to claim 4, wherein
the second restriction member is provided in a distal end portion of the second slide shaft, and
the movement of the second slide shaft is restricted by contact of the second restriction member with a distal end portion of the second holder that occurs with the movement of the second slide shaft.

17. The rotating tool according to claim 3, wherein
the stir pin is the first restriction member, and
the movement of the first slide shaft is restricted by contact of the stir pin with a distal end portion of the first holder that occurs with the movement of the first slide shaft.

18. The rotating tool according to claim 4, wherein
the shoulder is the second restriction member, and
the movement of the second slide shaft is restricted by contact of the shoulder with a distal end portion of the second holder that occurs with the movement of the second slide shaft.

19. A joining device comprising:
the rotating tool according to any one of claims 1 to 18;
a power unit configured to output the rotating force to be transmitted to the rotating shaft of the rotating tool; and
a position controller configured to hold the fixation portion of the rotating tool and perform position control of the rotating tool, wherein
the joining device performs the friction stir welding on the to-be-joined members by causing the position controller to move the rotating tool such that the rotating tool is located at a predetermined height position relative to the to-be-joined members, and insert the stir pin into the to-be-joined members.

20. A joining method comprising performing friction stir welding on the to-be-joined members by moving the rotating tool according to any one of claims 1 to 18 such that the rotating tool is located at a predetermined height position relative to the to-be-joined members, and inserting the stir pin into the to-be-joined members.
